(19) **Europäisches Patentamt**
**European Patent Office**
**Office européen des brevets**

(11) **EP 3 303 075 B1**

(12) **EUROPÄISCHE PATENTSCHRIFT**

(45) Veröffentlichungstag und Bekanntmachung des Hinweises auf die Patenterteilung:
**26.08.2020  Patentblatt 2020/35**

(51) Int Cl.:
***B60T 8/17*** *(2006.01)*          ***B60T 8/1766*** *(2006.01)*

(21) Anmeldenummer: **16723653.8**

(86) Internationale Anmeldenummer:
**PCT/EP2016/000667**

(22) Anmeldetag: **26.02.2016**

(87) Internationale Veröffentlichungsnummer:
**WO 2016/188602 (01.12.2016 Gazette 2016/48)**

(54) **VERFAHREN UND VORRICHTUNG ZUM ELEKTRONISCHEN REGELN EINER FAHRZEUGVERZÖGERUNG IN EINEM ABS-BREMSSYSTEM**

METHOD AND DEVICE FOR ELECTRONICALLY CONTROLLING A VEHICLE DECELERATION IN AN ABS BRAKING SYSTEM

PROCÉDÉ ET DISPOSITIF DE RÉGULATION ÉLECTRONIQUE D'UN SYSTÈME DE RALENTISSEMENT DE VÉHICULE DANS UN SYSTÈME DE FREINAGE ABS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2015   DE 102015006738**

(43) Veröffentlichungstag der Anmeldung:
**11.04.2018   Patentblatt 2018/15**

(73) Patentinhaber: **WABCO GmbH**
**30453 Hannover (DE)**

(72) Erfinder:
• **BOETHEL, Andreas**
**31177 Harsum (DE)**

• **ECKERT, Horst**
**31547 Rehburg-Loccum (DE)**
• **WALLBAUM, Torsten**
**31089 Duingen (DE)**

(74) Vertreter: **Rabe, Dirk-Heinrich**
**Am Lindener Hafen 21**
**30453 Hannover (DE)**

(56) Entgegenhaltungen:
**DE-A1-102006 045 317     DE-A1-102009 021 685**
**DE-A1-102011 118 130     DE-B3-102011 017 018**

**Beschreibung**

Die Erfindung betrifft ein Verfahren zum elektronischen Regeln einer Fahrzeugverzögerung in einem ABS-Bremssystem, insbesondere in einem Nutzfahrzeug, durch Einstellen des Bremsdruckes an einer zu regelnden Fahrzeugachse in Abhängigkeit einer aktuellen Fahrzeug-Ist-Verzögerung sowie eine Vorrichtung zur Durchführung des Verfahrens.

In Nutzfahrzeugen dient eine Bremsdruckregelung, die den Bremsdruck limitiert (electronic brake force limiter, EBL) insbesondere dazu, die von einem Bremssystem bzw. einem Fahrer gewünschte Bremswirkung in geeigneter Weise auf die Fahrzeugachsen zu verteilen, so dass das Fahrzeug entsprechend einem von einem Fahrer vorgegebenen Fahrerwillen bzw. einer Fahrzeug-Soll-Verzögerung verzögert wird und gleichzeitig in Abhängigkeit der Fahrsituation stabil bleibt. Denn bei einer starken Bremsung, d. h. bei einer hohen Fahrzeug-Soll-Verzögerung wird das Fahrzeuggewicht auf die Vorderachse verlagert, so dass Hinterräder an der Hinterachse weniger stark auf den Untergrund gedrückt werden, wodurch ein Blockieren der Hinterräder unterstützt wird.

Durch Limitieren des Bremsdruckes an Radbremsen der Hinterräder kann bei einer Bremsung ein frühzeitiges Blockieren der Hinterräder vermieden werden. Die Limitierung des Bremsdruckes kann in Abhängigkeit einer Achslast erfolgen, da bei Fahrzeugen, die schwer beladen sind, über die Hinterachse mehr Bremskraft auf die Straße gebracht werden kann als bei unbeladenen Fahrzeugen, bei denen eine zu starke Bremsung der Hinterräder den oben beschriebenen Effekt noch verstärkt; die Blockierneigung der Hinterräder steigt.

Zur Messung der Beladung bei blattgefederten Fahrzeugen kann ein mechanischer Wegsensor vorgesehen sein, der je nach Beladung stärker oder schwächer ausgelenkt wird. Bei luftgefederten Fahrzeugen kann dazu ein Drucksensor, der den Druck in einem Tragbalg misst, verwendet werden. In Abhängigkeit des beladungsabhängigen Messsignals kann auf das Gewicht geschlossen und in Abhängigkeit davon eine Limitierung des Bremsdruckes vorgenommen werden.

In Fahrzeugen ohne einen derartigen mechanischen Wegsensor oder Drucksensor, in denen keine direkte Messung der Beladung vorgesehen ist, kann eine elektronische Bremsdrucklimitierung vorgesehen sein. Dabei wird in Abhängigkeit eines Unterschiedes zwischen einer Raddrehgeschwindigkeit der Vorderräder und der Raddrehgeschwindigkeit der Hinterräder oder in Abhängigkeit des Unterschiedes zwischen einem Bremsschlupf der Vorderräder und dem Bremsschlupf der Hinterräder eine Regelung des Bremsdruckes an den Radbremsen der Hinterräder vorgenommen. Da der Unterschied in den Raddrehgeschwindigkeiten bzw. dem Bremsschlüpfen beladungsabhängig ist, wird der Bremsdruck entsprechend auf die Fahrzeugachsen verteilt, um zu verhindern, dass die Räder der Hinterachse frühzeitig eine Blockierneigung zeigen und um das Fahrzeug wie gewollt zu verzögern.

Die DE 10 2008 009 948 B3 offenbart eine elektronische Bremsdruckregelung, bei der der Bremsdruck an den Radbremsen in Abhängigkeit eines Achslastsensors und der Fahrzeug-Soll-Verzögerung gesteuert wird. Bei Ausfall des Achslastsensors erfolgt eine Regelung des Bremsdruckes in Abhängigkeit des Unterschieds der Bremsschlüpfe an den Fahrzeugachsen, d. h. in Abhängigkeit eines gemessenen Ist-Differenzschlupfes.

DE 10 2011 118 130 B4 offenbart ebenfalls eine elektronische Bremsdruckregelung, bei der die Bremskräfte in Abhängigkeit eines ermittelten Ist-Differenzschlupfes oder einer ermittelten Differenzgeschwindigkeit der Räder auf die Fahrzeugachsen verteilt wird, um das Fahrzeug wie gewollt zu verzögern. Dabei wird der Bremsdruck an den Radbremsen der Hinterräder bei Überschreiten des Ist-Differenzschlupf über einen Soll-Differenzschlupf begrenzt. Der Soll-Differenzschlupf ist dabei abhängig von der Fahrzeug-Soll-Verzögerung, wobei der Soll-Differenzschlupf bei höheren Fahrzeug-Soll-Verzögerungen ansteigt, um einen feinfühligeren Übergang zu einer ABS-Regelung zu gewährleisten, die in dem Fall eher eingreift als bei einem konstant verlaufenden Soll-Bremsschlupf.

Nachteilig dabei ist, dass ein Erhöhen des Soll-Differenzschlupfes bei hoher Fahrzeug-Soll-Verzögerung ein frühes Ansteuern der ABS-Regelung bewirkt, wodurch das Bremsverhalten unruhiger und unsicherer wird, da die ABS-Regelung früher eingreifen muss.

In der DE 10 2006 045 317 A1 ist eine elektronische Bremskraftverteilung offenbart, bei der die Bremskräfte statt in Abhängigkeit des Differenzschlupfes in Abhängigkeit der Fahrzeugverzögerung auf die Fahrzeugachsen verteilt werden. Dazu ist vorgesehen, eine Fahrzeug-Ist-Verzögerung zu messen und bei Erreichen einer Maximalverzögerung, d. h. eines bestimmten Schwellenwertes für die Fahrzeug-Ist-Verzögerung den Bremsdruck an der Hinterachse zu regeln. Die Maximalverzögerung ist hierbei derartig definiert, dass ab diesem Wert die Hinterräder eher dazu neigen zu blockieren als die Vorderräder. Somit wird eine Blockierneigung der Hinterräder an die Blockierneigung der Vorderräder angepasst.

Nach Überschreiten der Maximalverzögerung ist vorgesehen, den Bremsdruck an den Radbremsen der Hinterräder geregelt aufzubauen, wobei der Gradient niedriger ist als der Gradient des sich aufbauenden Bremsdruckes an den Radbremsen der Vorderräder. Dadurch wird der Bremsdruck an den Radbremsen der Hinterachse dem Bremsdruck an den Radbremsen der Vorderräder nachgeführt, d. h. um einen bestimmten Wert geringer gehalten.

Nachteilig hierbei ist, dass oberhalb der Maximalverzögerung das Bremsverhalten durch das Nachregeln insgesamt unruhig wirkt und als unangenehm empfunden wird.

Es ist daher Aufgabe der Erfindung, ein Verfahren und eine Vorrichtung zum elektronischen Regeln einer Fahrzeugverzögerung in einem ABS-Bremssystem bereitzustellen, das eine angenehme und sichere Bremsung mit einem ruhigen Bremsverhalten gewährleistet.

Diese Aufgabe wird durch ein Verfahren nach Anspruch 1 sowie eine Vorrichtung zur Durchführung des Verfahrens nach Anspruch 16 gelöst. Bevorzugte Weiterbildungen sind in den Unteransprüchen angegeben.

Erfindungsgemäß ist demnach vorgesehen, einen Bremsdruck an Radbremsen einer zu regelnden Fahrzeugachse in Abhängigkeit einer erfassten Fahrzeug-Ist-Verzögerung, d. h. einer negativen Ist-Beschleunigung des Fahrzeuges zu regeln, wobei der Bremsdruck an den Radbremsen dieser Fahrzeugachse limitiert wird, wenn die Fahrzeug-Ist-Verzögerung größer ist als eine Maximalverzögerung und der Bremsdruck an den Radbremsen dieser Fahrzeugachse erhöht wird, wenn die Fahrzeug-Ist-Verzögerung kleiner ist als eine Minimalverzögerung. Unter Limitieren wird hierbei verstanden, dass der Bremsdruck an den Radbremsen der zu regelnden Fahrzeugachse nicht weiter erhöht werden darf, d. h. der Bremsdruck kann lediglich auf dem aktuellen Wert gehalten oder je nach Fahrerwunsch auf einen niedrigeren Wert abgesenkt werden.

Somit wird erfindungsgemäß ein Verfahren zum Regeln der Fahrzeugverzögerung (Fahrzeugverzögerungsregelung) durch ein entsprechendes Einstellen der Bremsdrücke in Abhängigkeit der Maximalverzögerung und der Minimalverzögerung bereitgestellt. Dadurch kann vorteilhafterweise das Regelungsverhalten im Fahrzeug beruhigt werden, da weitere Regelungseingriffe, die die Bremsung verstärken, nach Erreichen der Maximalverzögerung unterbunden werden.

Die Fahrzeug-Ist-Verzögerung wird hierbei beispielsweise durch einen Beschleunigungssensor oder aus der Ableitung einer über Raddrehzahlsensoren bestimmten Fahrzeugreferenzgeschwindigkeit bestimmt. Dabei kann berücksichtigt werden, ob das Fahrzeug bereits ohne eine Betätigung der Bremsen verzögert wird, beispielsweise durch Roll- und Luftwiderstände, eine Fahrbahnneigung oder eine Dauerbremse im Fahrzeug. In diesem Fall wird dem Verfahren eine Differenz aus gemessener Fahrzeug-Ist-Verzögerung und einer entsprechenden Offset-Fahrzeug-Verzögerung zugrunde gelegt.

Die Maximalverzögerung und die Minimalverzögerung sind insbesondere abhängig von einer durch den Fahrer vorgegebenen Fahrzeug-Soll-Verzögerung, so dass sich eine Maximalverzögerungs-Kennlinie und eine Minimalverzögerungs-Kennlinie ergeben. Die Fahrzeug-Soll-Verzögerung kann hierbei beispielsweise durch einen Bremswertgeber bestimmt werden, d. h. beispielsweise einen Wegsensor, der einen Betätigungsweg eines Bremsventils oder eines Bremspedals durch den Fahrer erfasst, oder einen Drucksensor, der einen vom Fahrer mit einem Bremsventil ausgesteuerten Bremsdruck erfasst. Aus den Kennlinien wird bei einer erfassten Fahrzeug-Soll-Verzögerung der Wert der Maximalverzögerung bzw. der Minimalverzögerung bestimmt und der folgenden Fahrzeugverzögerungsregelung zugrunde gelegt. Die Maximalverzögerungs-Kennlinie verläuft hierbei in Abhängigkeit der Fahrzeug-Soll-Verzögerung beispielsweise konstant oder vorteilhafterweise harmonisch, d. h. gleichmäßig ansteigend ohne Abstufungen.

Dadurch kann vorteilhaferweise ein angenehmes Bremsgefühl und eine verbesserte Stufbarkeit erreicht werden. Denn durch die Limitierung des Bremsdruckes auf die in Abhängigkeit der Fahrzeug-Soll-Verzögerung harmonisch verlaufende Maximalverzögerungs-Kennlinie, die auch als Feeling-Kurve bezeichnet wird, wird die Bremskraft auf der zu regelnden Fahrzeugachse derartig begrenzt, dass eine daraus resultierende Fahrzeug-Ist-Verzögerung vom Fahrer als angenehm empfunden wird. Der Verlauf der Feeling-Kurve erlaubt zudem eine verbesserte Stufbarkeit, da der Bremsdruck in Abhängigkeit der Fahrzeug-Soll-Verzögerung, d. h. des Fahrerwillens feinfühliger geregelt werden kann.

Vorzugsweise wird der Bremsdruck an der zu regelnden Fahrzeugachse gehalten, wenn bei einer bestimmten vorgegebenen Fahrzeug-Soll-Verzögerung die Fahrzeug-Ist-Verzögerung größer als die Maximalverzögerung ist. Dadurch verläuft die Bremsung insgesamt ruhiger, da zumindest durch die erfindungsgemäße Fahrzeugverzögerungsregelung nicht nachgeregelt wird, d. h. der Bremsdruck wird im Rahmen der Limitierung vorzugsweise auch nicht verringert. Lediglich gemäß einer alternativen Ausführung kann auch ein Drucksenken vorgesehen sein.

Ist die Fahrzeug-Ist-Verzögerung größer oder gleich der Maximalverzögerung und erhöht der Fahrer durch eine zusätzliche Betätigung des Bremspedals bzw. eines Bremsventils die Fahrzeug-Soll-Verzögerung, wird eine stärkere Verzögerung des Fahrzeuges lediglich von einer weiteren, nicht durch die erfindungsgemäße Fahrzeugverzögerungsregelung geregelten Fahrzeugachse bewirkt, es sei denn, die Fahrzeug-Ist-Verzögerung wird aufgrund dessen wieder kleiner als die Maximalverzögerung.

Die Maximalverzögerung ist in Abhängigkeit der Fahrzeug-Soll-Verzögerung insbesondere derartig festgelegt, dass eine quasi unnötige Bremsung durch die zu regelnde Fahrzeugachse vermieden werden kann, indem der Bremsdruck dieser Fahrzeugachse auf einen Wert begrenzt wird, der zur Abbremsung des Fahrzeuges gemäß der vom Fahrer vorgegebenen Fahrzeug-Soll-Verzögerung maximal benötigt wird. Dabei wird insbesondere berücksichtigt, welche Bremswirkung durch die weitere, nicht geregelte Fahrzeugachse erreicht werden kann. Dies hat beispielsweise den Vorteil, dass bei hoher Fahrzeug-Soll-Verzögerung bzw. hoher Fahrzeug-Ist-Verzögerung das Gewicht des Fahrzeuges auf eine Vorderachse verlagert wird und die in dem Fall geregelte Hinterachse eher dazu neigt, zu blockieren. Durch Limitieren des Bremsdruckes kann ein Blockieren der Hinterräder vermieden werden.

Um auch bei unterschiedlichen Beladungszuständen des Fahrzeuges eine angenehme und sichere Bremsung zu gewährleisten, ist die Maximalverzögerung in Abhängigkeit der Fahrzeug-Soll-Verzögerung vorzugsweise beladungsabhängig. Demnach verläuft die Maximalverzögerungs-Kennlinie bei einer hohen Beladung flacher und bei einer geringen Beladung steiler, d. h. stärker ansteigend, so dass der Bremsdruck an der zu regelnden Fahrzeugachse bei hoher Beladung bereits bei einer niedrigeren Fahrzeug-Ist-Verzögerung gehalten wird als bei einer geringeren Beladung. Dadurch kann vorteilhafterweise erreicht werden, dass dem Fahrer durch die ausgesteuerte Bremswirkung der Beladungszustand des Fahrzeuges vermittelt wird, denn bei einer geringen Beladung wird das Fahrzeug bei gleicher Fahrzeug-Soll-Verzögerung stärker verzögert als bei einer hohen Beladung.

Ist die Fahrzeug-Ist-Verzögerung kleiner als die Minimalverzögerung wird vorteilhafterweise eine Bremskraftlimitierung an der zu regelnden Fahrzeugachse beendet bzw. gesperrt, um sicherzustellen, dass eine Mindestverzögerung nicht unterbunden wird, beispielsweise, um Anforderungen bezüglich einer gesetzlich geforderten Mindest-Bremswirkung in Abhängigkeit der Fahrzeug-Soll-Verzögerung zu genügen; die Sicherheit steigt.

Der Bremsdruck an der zu regelnden Fahrzeugachse kann sowohl erhöht als auch gehalten werden, wenn die Fahrzeug-Ist-Verzögerung kleiner als die Maximalverzögerung und größer als die Minimalverzögerung ist. Vorzugsweise kann auch eine Verringerung des Bremsdruckes vorgesehen sein. In diesem Bereich kann beispielsweise eine Regelung der Fahrzeugverzögerung zusätzlich in Abhängigkeit eines Differenzschlupfes (Differenzschlupfregelung, DSR) zwischen den Fahrzeugachsen erfolgen.

Dazu wird ein Ist-Differenzschlupf bestimmt, d. h. ein Unterschied zwischen einem aktuellen Drehverhalten der zu regelnden Fahrzeugachse, beispielsweise der Hinterachse, und der weiteren Fahrzeugachse, beispielsweise der Vorderachse. Das Drehverhalten wird durch einen Bremsschlupf oder eine Drehgeschwindigkeit der Räder der entsprechenden Fahrzeugachse charakterisiert. Der Ist-Differenzschlupf gibt also an, wie stark die eine der Fahrzeugachsen in Relation zur anderen Fahrzeugachse überbremst oder unterbremst ist. Als Überbremsen wird hierbei verstanden, dass die zu regelnde Fahrzeugachse relativ zu der weiteren Fahrzeugachse langsamer dreht, d. h. insbesondere einen höheren Bremsschlupf aufweist, während bei einem Unterbremsen, die zu regelnde Fahrzeugachse einen geringeren Bremsschlupf aufweist als die weitere Fahrzeugachse, d. h. schneller dreht.

Vorzugsweise ist der Ist-Differenzschlupf proportional zu einer Differenz aus dem Bremsschlupf der durch einen Motor angetriebenen Hinterachse minus dem Bremsschlupf der Vorderachse, vorzugsweise normiert auf den Bremsschlupf der angetriebenen Hinterachse. Die Berechnungsmethode ist allerdings nicht darauf beschränkt; beispielsweise kann der Ist-Differenzschlupf auch in Abhängigkeit der Drehgeschwindigkeit der Fahrzeugachsen bestimmt werden aus der Differenz aus der Drehgeschwindigkeit der Vorderachse minus der Drehgeschwindigkeit der angetriebenen Hinterachse, vorzugsweise normiert auf die Drehgeschwindigkeit der Vorderachse. Auch andere Berechnungsmethoden sind denkbar.

Die Differenzschlupfregelung regelt den Ist-Differenzschlupf auf einen Soll-Differenzschlupf, indem der Bremsdruck an der zu regelnden Fahrzeugachse limitiert, vorzugsweise gehalten wird, um ein Überbremsen zu vermeiden, und erhöht wird, um ein Unterbremsen der zu regelnden Fahrzeugachse zu vermeiden; die Blockierneigung der zu regelnden Fahrzeugachse wird somit an die Blockierneigung der anderen Fahrzeugachse, die durch die Differenzschlupfregelung nicht bremsdruckgeregelt wird, angeglichen. Dazu werden der Ist-Differenzschlupf und der Soll-Differenzschlupf verglichen und der Bremsdruck an der zu regelnden Fahrzeugachse bei einem Abweichen entsprechend eingestellt. Dazu kann bei ungetakteten Bremsventilen vorteilhafterweise eine Toleranz oberhalb und/oder unterhalb des Soll-Differenzschlupfes vorgesehen sein, um das Regelverhalten zu beruhigen.

Die Differenzschlupfregelung unterliegt hierbei auch der Vorgabe, dass der Bremsdruck limitiert wird, wenn die Fahrzeug-Ist-Verzögerung größer ist als die Maximalverzögerung, z.B. aufgrund der Differenzschlupfregelung, und erhöht wird, wenn sie kleiner ist als die Minimalverzögerung. Im Fall, dass die Fahrzeug-Ist-Verzögerung kleiner ist als die Minimalverzögerung, wird die Differenzschlupfregelung gepulst abgebrochen; eine Regelung in Abhängigkeit des Ist-Differenzschlupfes ist dann aus Sicherheitsgründen nicht mehr erlaubt. Eine Limitierung des Bremsdruckes bei Überschreiten der Maximalverzögerung durch die Fahrzeug-Ist-Verzögerung dient vorteilhafterweise einer Beruhigung des Verzögerungsverlaufes, denn es erfolgen weniger Regelungseingriffe.

Vorteilhafterweise kann der Bremsdruck an der zu regelnden Fahrzeugachse auch verringert werden, wenn die Fahrzeug-Ist-Verzögerung größer als die Maximalverzögerung ist und die zu regelnde Fahrzeugachse überbremst ist. Hierdurch sinkt die Fahrzeug-Ist-Verzögerung vorteilhafterweise schneller auf die Maximalverzögerung und die Überbremsung der zu regelnden Fahrzeugachse nimmt gleichzeitig ab; weiterhin steigen die Sicherheit und der Bremskomfort.

Der Soll-Differenzschlupf, auf den die Differenzschlupfregelung den Ist-Differenzschlupf regelt, kann beispielsweise konstant sein und zu Beginn einer Bremsung, d. h. wenn noch keine Bremskräfte wirken, bestimmt werden, um einen Offset-Differenzschlupf zu erhalten, der ein Motorschleppmoment, einen Verschleiß der Räder und ggf. Fahrbahneigenschaften berücksichtigt. Im Fall der oben genannten Berechnungsmethode ist der Offset-Differenzschlupf dabei größer als Null, da die angetriebene Hinterachse durch ein Motorschleppmoment langsamer dreht als die mitlaufende Vorderachse.

Vorteilhafterweise kann der Soll-Differenzschlupf zusätzlich abhängig von der Fahrzeug-Ist-Verzögerung oder der Fahrzeug-Soll-Verzögerung sein. Beispielsweise kann der Soll-Differenzschlupf bei steigender Fahrzeug-Ist-Verzögerung bzw. Fahrzeug-Soll-Verzögerung vom Offset-Differenzschlupf ausgehend derartig auf Null, d. h. in Richtung eines synchronen Raddrehverhaltens der Räder der zu regelnden und der weiteren Fahrzeugachse abfallen, dass für den Fall, dass die zu regelnde Fahrzeugachse die Hinterachse ist einem Blockieren der beladbaren Hinterachse entgegengewirkt wird. Ist hierbei der nach obiger Berechnungsmethode bestimmte Ist-Differenzschlupf größer als der Soll-Differenzschlupf, ist die Hinterachse relativ zur Vorderachse überbremst, d. h. der Hinterachs-Bremsdruck wird limitiert. Ist der Ist-Differenzschlupf hingegen kleiner als der Soll-Differenzschlupf, ist die Hinterachse relativ zur Vorderachse unterbremst, d. h. der Hinterachs-Bremsdruck wird erhöht. Somit wird der Hinterachs-Bremsdruck aufgrund des mit steigender Fahrzeug-Ist-Verzögerung bzw. Fahrzeug-Soll-Verzögerung abfallenden Soll-Differenzschlupfes bereits bei geringerem Ist-Differenzschlupf, d. h. bei einem geringeren relativen Überbremsen limitiert.

Dadurch wird vorteilhafterweise berücksichtigt, dass bei hoher Fahrzeug-Ist-Verzögerung oder Fahrzeug-Soll-Verzögerung die beladbare Hinterachse tendenziell eher schlüpft, d. h. überbremst ist und somit nach obiger Berechnungsmethode ein tendenziell höherer Ist-Differenzschlupf vorliegt, was im unbeladenen Zustand noch verstärkt wird. Verschiebt sich der Soll-Differenzschlupf bei steigender Fahrzeug-Ist-Verzögerung oder Fahrzeug-Soll-Verzögerung zu geringeren Werten, wird der Hinterachs-Bremsdruck bereits bei geringerem Ist-Differenzschlupf, d. h. höherem Hinterachs-Bremsschlupf im Vergleich zum Vorderachs-Bremsschlupf, limitiert; ein zu frühes Eingreifen der überlagerten ABS-Regelung kann verhindert werden; das Fahrverhalten wird dadurch insgesamt ruhiger und sicherer.

Ist die zu regelnde Fahrzeugachse die Vorderachse, beispielsweise bei einem Nutzfahrzeug mit einer höheren Beladung auf der Hinterachse, z.B. einem Bus, wird die Vorderachse weniger auf den Untergrund gedrückt und beginnt somit tendenziell eher zu schlüpfen, wobei nach obiger Berechnungsmethode der Ist-Differenzschlupf dadurch ausgehend vom Offset-Differenzschlupf tendenziell kleiner wird. Ist der nach obiger Berechnungsmethode bestimmte Ist-Differenzschlupf größer als der Soll-Differenzschlupf, ist die Vorderachse relativ zur Hinterachse unterbremst, d. h. der Vorderachs-Bremsdruck wird erhöht. Ist der Ist-Differenzschlupf hingegen kleiner als der Soll-Differenzschlupf, ist die Vorderachse relativ zur Hinterachse überbremst, d. h. der Hinterachs-Bremsdruck wird limitiert. Somit sorgt der vom Offset-Differenzschlupf in Richtung Null abfallende Soll-Differenzschlupf dafür, dass ein zu frühes Eingreifen der überlagerten ABS-Regelung an der Vorderachse vermieden werden kann; somit wird das Fahrverhalten insgesamt ruhiger und sicherer.

Vorteilhafterweise kann aus dem Ist-Differenzschlupf eine Beladung des Fahrzeuges ermittelt werden. Ist das Fahrzeug unbeladen, d. h. auf die Hinterachse wirkt eine geringe Gewichtskraft, neigen die Hinterräder bei gleicher Bremsbetätigung bzw. bei einer vorgegebenen Fahrzeug-Soll-Verzögerung eher zu einem Blockieren als bei einem voll beladenen Fahrzeug mit höherem Gewicht auf der Hinterachse. Der Ist-Differenzschlupf variiert somit in Abhängigkeit der Beladung des Fahrzeuges bei einer vorgegebenen Fahrzeug-Soll-Verzögerung. Somit kann aus dem Ist-Differenzschlupf auf eine Beladung des Fahrzeuges geschlossen und von der Differenzschlupfregelung indirekt eine Verteilung der Bremskräfte auf die Fahrzeugachsen in Abhängigkeit der Beladung erreicht werden.

Vorzugsweise ist das Fahrzeug ein Nutzfahrzeug, bei dem sich zwischen einem beladenen Zustand und einem unbeladenen Zustand das Gewicht auf der Hinterachse relativ zur Vorderachse stärker verändert. In dem Fall ist die durch die erfindungsgemäße Bremsdruckregelung zu regelnde Fahrzeugachse vorteilhafterweise die Hinterachse des Fahrzeuges. In das Bremsverhalten einer Vorderachse wird dann durch die erfindungsgemäße Bremsdruckregelung nicht eingegriffen. Zusätzlich kann auch eine zweite Hinterachse in gleicher Weise geregelt werden. Grundsätzlich ist in analoger Weise aber auch eine Bremsdruckregelung der Vorderachse zum Regeln der Fahrzeugverzögerung möglich, wobei dann das Bremsverhalten an der Hinterachse nicht durch das erfindungsgemäße Verfahren geregelt wird. Dies ist beispielsweise dann sinnvoll, wenn das Nutzfahrzeug ein Bus ist, bei dem sich ein umgekehrter Beladungszustand der Fahrzeugachsen ergibt.

Zum Regeln der Fahrzeugverzögerung durch Einstellen der entsprechenden Bremsdrücke an den Radbremsen der zu regelnden Fahrzeugachse steuert eine erfindungsgemäße Vorrichtung, beispielsweise eine FV-Steuereinrichtung (Fahrzeugverzögerungs-Steuereinrichtung), ABS-Bremsventile, d. h. als 2/2-Magnetventil ausgebildete Einlassventile und Auslassventile an den Radbremsen der zu regelnden Fahrzeugachse derartig an, dass ein Bremsdruck an der zu regelnden Fahrzeugachse entweder gehalten oder erhöht wird. Gemäß einer Ausführungsform kann die FV-Steuereinrichtung den Bremsdruck durch Entlüften wahlweise auch verringern, um die Bremskraft aufzuheben bzw. zu verringern.

Die ABS-Bremsventile sind hierbei Teil eines im Fahrzeug vorhandenen Antiblockiersystems (ABS) zur Regelung des Bremsschlupfes an den einzelnen Rädern. Die ABS-Bremsventile können sowohl von einer ABS-Steuereinrichtung als auch von der FV-Steuereinrichtung angesteuert werden. Die ABS-Steuereinrichtung hat jedoch Vorrang vor der FV-Steuereinrichtung, so dass bei Erkennen eines zu hohen Bremsschlupfes an einem der Räder der zu regelnden Fahrzeugachse von der ABS-Steuereinrichtung eine herkömmliche ABS-Regelung durchgeführt wird und die erfindungsgemäße Fahrzeugverzögerungsregelung durch die FV-Steuereinrichtung verboten ist.

Vorzugsweise können verschiedene beladungsabhängige Maximalverzögerungs-Kennlinien in der FV-Steuereinrichtung gespeichert sein, die der Fahrzeugverzögerungsregelung je nach Beladung des Fahrzeuges zugrunde gelegt werden. Der Beladungszustand, in Abhängigkeit dessen die Maximalverzögerungs-Kennlinie ausgewählt wird, kann beispielsweise aus der oben beschriebenen Differenzschlupfregelung abgeleitet werden, d. h. aus dem beladungsabhängigen Ist-Differenzschlupf. Es ist aber auch möglich, einen beliebigen Achslastsensor zu verwenden, um den Beladungszustand zu bestimmen, der entweder einen Weg zwischen beispielsweise einem Fahrzeugrahmen und der beladenen Fahrzeugachse oder einen auf die beladbare Fahrzeugachse bzw. einen Tragbalg an der beladbaren Fahrzeugachse wirkenden Druck über einen Drucksensor misst, woraus von der FV-Steuereinrichtung auf einen Beladungszustand geschlossen werden kann.

Die Beladungsinformation kann auch über einen CAN-BUS von einem ECAS-System auf die FV-Steuereinrichtung übermittelt werden, das die Luftfederung des Fahrzeuges elektronisch in Abhängigkeit einer Achslast regelt. Außerdem kann die FV-Steuereinrichtung eine aktuelle Fahrzeugmasse aus Informationen über die aktuelle Motorleistung und die daraus folgende Fahrzeugbeschleunigung ermitteln, woraus unter Kenntnis der unbeladenen Fahrzeugmasse auf eine Beladung geschlossen werden kann. Weiterhin kann bei der Bestimmung der Beladung bzw. bei der Auswahl der Maximalverzögerungs-Kennlinie auch das Vorhandensein eines Anhängers berücksichtigt werden, der anteilmäßig an der ermittelten Masse des Fahrzeugs beteiligt sein kann, wobei diese Information der FV-Steuereinrichtung beispielsweise von einer Anhänger-Steuereinrichtung über den CAN-BUS bereitgestellt werden kann.

Die Erfindung wird im Folgenden anhand der beiliegenden Zeichnung erläutert. Es zeigen:

Fig. 1     ein Fahrzeug mit einem elektronischen Bremssystem als Blockschaltbild;

Fig. 2     Diagramm der Abhängigkeit einer Fahrzeug-Ist-Verzögerung von einer Fahrzeug-Soll-Verzögerung zum Festlegen des Regelungsverhaltens;

Fig. 3     Diagramm der Abhängigkeit eines Soll-Differenzschlupfes von einer Fahrzeug-Ist-Verzögerung zur Verwendung in einer Differenzschlupfregelung;

Fig. 4a,b   Abhängigkeit eines ausgesteuerten Bremsdruckes an den Fahrzeugachsen in Abhängigkeit einer Beladung;

Fig. 5     Flussdiagramm zur Durchführung der erfindungsgemäßen elektronischen Fahrzeugverzögerungsregelung; und

Fig. 6     Flussdiagramm zur Durchführung der Differenzschlupfregelung als Teil der elektronischen Fahrzeugverzögerungsregelung gemäß Fig. 5.

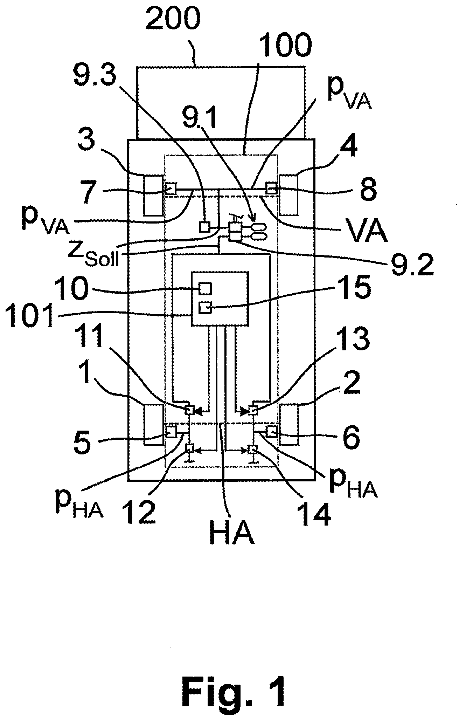

Die Fig. 1 zeigt ein Fahrzeug 200 mit einem Bremssystem 100 mit den hier relevanten Komponenten. Demnach ist eine Hinterachse HA mit Hinterrädern 1, 2 sowie eine Vorderachse VA mit Vorderrädern 3, 4 vorgesehen. Die Hinterräder 1, 2 können über hintere Radbremsen 5, 6 und die Vorderräder 3, 4 über vordere Radbremsen 7, 8 abgebremst werden, indem in Abhängigkeit einer vom Fahrer vorgegebenen Fahrzeug-Soll-Verzögerung $z_{Soll}$ ein von Bremszylindern 9.1 bereitgestellter Bremsdruck p über ein zweikreisiges Bremsventil 9.2 auf die hinteren Radbremsen 5, 6 bzw. die vorderen Radbremsen 7, 8 übertragen wird. Die Fahrzeug-Soll-Verzögerung $z_{Soll}$ kann hierbei beispielsweise von einem als Bremswertgeber dienenden Drucksensor 9.3 erfasst werden, der einen vom Fahrer über das Bremsventil 9.2 ausgesteuerten Bremsdruck, gemäß Fig. 1 beispielhaft einen Vorderachs-Bremsdruck $p_{VA}$, erfasst. Das Bremssystem 100 kann ein elektrohydraulisches oder elektro-pneumatisches Bremssystem sein, d. h. es wird ein Flüssigkeitsdruck oder ein Luftdruck ausgesteuert. Elektrisch angesteuert wird das Bremssystem 100 insbesondere von einer EBS-Steuereinrichtung 101.

Zur bremsschlupfgeregelten Abbremsung weist das Bremssystem 100 ein Antiblockiersystem (ABS) mit einer ABS-Steuereinrichtung 10 auf, die ABS-Bremsventile 11, 12, 13, 14 in Abhängigkeit eines erkannten Bremsschlupfes gepulst ansteuert. In Fig. 1 sind der Einfachheit halber lediglich die ABS-Bremsventile 11, 12, 13, 14 an den Hinterrädern 1, 2 dargestellt. Die Vorderräder 3, 4 können in gleicher Weise über die ABS-Steuereinrichtung 10 bremsschlupfgeregelt sein wie die Hinterräder 1, 2. Die ABS-Steuereinrichtung 10 ist gemäß dieser Ausführung in der EBS-Steuereinrichtung 101 integriert.

Die ABS-Bremsventile 11, 12, 13, 14 sind jeweils als 2/2-Magnetventile ausgeführt, wobei für jede hintere Radbremse 5, 6 ein Einlassventil 11, 13 und ein Auslassventil 12, 14 vorgesehen ist. Sind die Einlassventile 11, 13 geöffnet und die Auslassventile 12, 14 gesperrt, werden die hinteren Radbremsen 5, 6 mit einem vom Bremsventil 9.2 ausgesteuerten Hinterachs-Bremsdruck $p_{HA}$ beaufschlagt und somit eine entsprechende Bremsung bewirkt. Sind umgedreht die Einlassventile 11, 13 gesperrt und die Auslassventile 12, 14 geöffnet, werden die hinteren Radbremsen 5, 6 entlüftet und somit die Bremswirkung reduziert. Sind sowohl die Einlassventile 11, 13 als auch die Auslassventile 12, 14 gesperrt, wird ein an den hinteren Radbremsen 5, 6 wirkender Hinterachs-Bremsdruck $p_{HA}$ gehalten.

Im Rahmen des Ausführungsbeispiels wird in Bezug auf den Bremsdruck bzw. die Bremswirkung nicht zwischen der linken und der rechten hinteren Radbremse 5, 6 unterschieden, d. h. beide hinteren Radbremsen 5, 6 werden mit demselben Hinterachs-Bremsdruck $p_{HA}$ beaufschlagt, um zusammen mit den vorderen Radbremsen 7, 8 eine der Fahrzeug-Soll-Verzögerung $z_{Soll}$ entsprechende Bremswirkung zu erreichen. Es ist allerdings auch möglich, die ABS-Bremsventile 11, 12, 13, 14 der linken und der rechten hinteren Radbremsen 5, 6 unabhängig voneinander zu steuern, so dass an jeder hinteren Radbremse 5, 6 unterschiedliche Bremsdrücke vorliegen können. Selbiges gilt für die vorderen Radbremsen 7, 8, die beide mit demselben Vorderachs-Bremsdruck $p_{VA}$ beaufschlagt werden.

Erfindungsgemäß ist zusätzlich zur ABS-Regelung eine elektronische Regelung der Fahrzeugverzögerung (Fahrzeugverzögerungsregelung) vorgesehen, die den Hinterachs-Bremsdruck $p_{HA}$ derartig regelt, dass sich im Fahrzeug 200 eine bestimmte, von der Fahrzeug-Soll-Verzögerung $z_{Soll}$ abhängige Fahrzeug-Ist-Verzögerung $z_{Ist}$, d. h. eine negativen Beschleunigung einstellt. Gemäß dieser Ausführungsform wird unter Regelung ein Halten oder ein Erhöhen des Hinterachs-Bremsdruckes $p_{HA}$ verstanden. Gemäß einer Ausführung kann unter bestimmten Bedingungen auch ein Verringern des Hinterachs-Bremsdruckes $p_{HA}$ vorgesehen sein.

Die Fahrzeugverzögerungsregelung wird von einer FV-Steuereinrichtung 15 gesteuert, die gemäß dieser Ausführung in der EBS-Steuereinrichtung 101 integriert und ausgebildet ist, die ABS-Bremsventile 11, 12, 13, 14 an den hinteren Radbremsen 5, 6 anzusteuern. Die ABS-Steuereinrichtung 10 hat allerdings bezüglich der Steuerung der ABS-Bremsventile 11, 12, 13, 14 Vorrang vorder FV-Steuereinrichtung 15. D. h. bei Erkennen eines unzulässigen Bremsschlupfes an einem der Hinterräder 1, 2 wird eine bereits begonnene Fahrzeugverzögerungsregelung abgebrochen und von der ABS-Steuereinrichtung 10 eine herkömmliche ABS-Regelung durchgeführt.

Die Fahrzeugverzögerungsregelung legt gemäß dieser Ausführungsform wie folgt fest, bei welcher Fahrzeug-Ist-Verzögerung $z_{Ist}$ in Abhängigkeit der Fahrzeug-Soll-Verzögerung $z_{Soll}$ die ABS-Bremsventile 11, 12, 13, 14 angesteuert werden und das Fahrzeug 200 somit verzögert wird:

In der FV-Steuereinrichtung 15 sind eine von der Fahrzeug-Soll-Verzögerung $z_{Soll}$ abhängige Maximalverzögerungs-Kennlinie $z_{Kmax}$ sowie eine Minimalverzögerungs-Kennlinie $z_{Kmin}$ gespeichert, die jeweils festgelegte Abhängigkeiten einer Maximalverzögerung $z_{max}$ bzw. Minimalverzögerung $z_{min}$ von der Fahrzeug-Soll-Verzögerung $z_{Soll}$ darstellen. Die Maximalverzögerungs-Kennlinie $z_{Kmax}$ kann auch als Feeling-Kurve bezeichnet werden, die harmonisch verläuft und dadurch ein angenehmes Bremsgefühl beim Fahrer hervorruft.

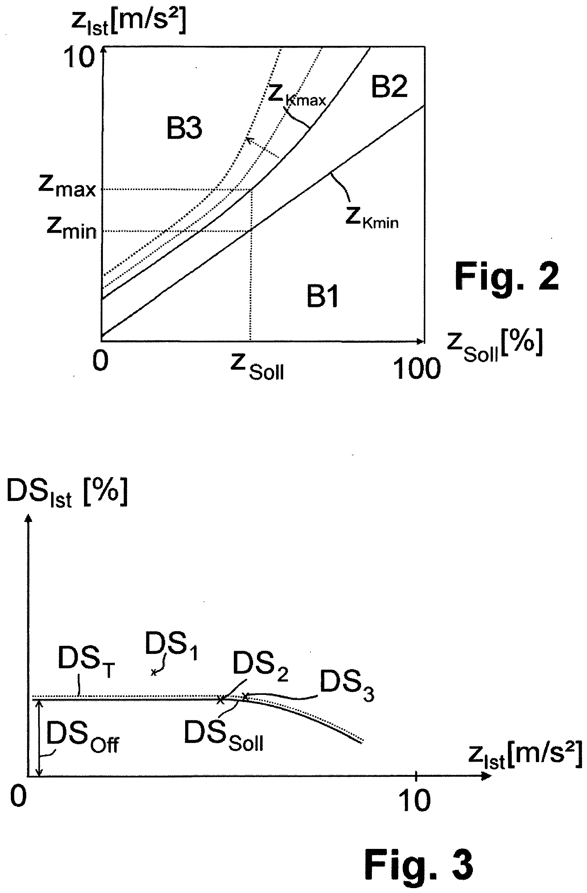

Gemäß Fig. 2 ist in einem Diagramm beispielhaft die Fahrzeug-Soll-Verzögerung $z_{Soll}$ in Prozent der Betätigung des Bremsventils 9.2 gegen die Fahrzeug-Ist-Verzögerung $z_{Ist}$ in m/s$^2$ aufgetragen. Die Maximalverzögerungs-Kennlinie $z_{Kmax}$ und die Minimalverzögerungs-Kennlinie $z_{Kmin}$ unterteilen das Diagramm in drei Bereiche B1, B2, B3. Ein erster Bereich B1 liegt zwischen der x-Achse ($z_{Soll}$) und der Minimalverzögerungs-Kennlinie $z_{Kmin}$, ein zweiter Bereich B2 zwischen Minimalverzögerungs-Kennlinie $z_{Kmin}$ und Maximalverzögerungs-Kennlinie $z_{Kmax}$ und ein dritter Bereich B3 oberhalb der Maximalverzögerungs-Kennlinie $z_{Kmax}$

Diese drei Bereiche B1, B2, B3 legen fest, wie die FV-Steuereinrichtung 15 die ABS-Bremsventile 11, 12, 13, 14 an den hinteren Radbremsen 5, 6 ansteuern darf und damit welche Bremskraft bzw. welcher Hinterachs-Bremsdruck $p_{HA}$ in Abhängigkeit der Fahrzeug-Soll-Verzögerung $z_{Soll}$ und der Fahrzeug-Ist-Verzögerung $z_{ist}$ auf die hinteren Radbremsen 5, 6 ausgesteuert wird. Da die Fahrzeugverzögerungsregelung in das Bremsverhalten der Vorderachse VA nicht eingreift, wird dadurch indirekt eine Bremsdruckverteilung zwischen Vorderachse VA und Hinterachse HA erreicht. Dabei wird an die vorderen Radbremsen 7, 8 der der Fahrzeug-Soll-Verzögerung $z_{Soll}$ entsprechende Bremsdruck p - ggf. überlagert von einer ABS-Regelung - direkt ausgesteuert.

Der Hinterachs-Bremsdruck $p_{HA}$ wird in Abhängigkeit der drei Bereiche B1, B2, B3 wie folgt geregelt:

Wird über das Bremsventil 9.2 ein bestimmter Bremsdruck $p_{HA}$, $p_{VA}$ an die Radbremsen 5, 6, 7, 8 ausgesteuert und somit vom Fahrer eine Fahrzeug-Soll-Verzögerung $z_{Soll}$ angefordert und liegt die daraus resultierende Fahrzeug-Ist-Verzögerung $z_{Ist}$, die aus der Bremsung der vorderen und der hinteren Radbremsen 5, 6, 7, 8 folgt, im ersten Bereich B1, veranlasst die FV-Steuereinrichtung 15 ein Öffnen der Einlassventile 11, 13 und ein Schließen der Auslassventile 12, 14, so dass an den hinteren Radbremsen 5,6 ein Druckaufbau erfolgen kann und somit eine steigende Abbremsung auch durch die Hinterräder 1, 2 ermöglicht wird.

Der Hinterachs-Bremsdruck $p_{HA}$ wird somit erhöht, wenn die Fahrzeug-Ist-Verzögerung $z_{Ist}$ bei einer bestimmten vorgegebenen Fahrzeug-Soll-Verzögerung $z_{Soll}$ kleiner ist als die Minimalverzögerung $z_{min}$, die aus der Minimalverzögerungs-Kennlinie $z_{Kmin}$ für die Fahrzeug-Soll-Verzögerung $z_{Soll}$ folgt. Gemäß Fig. 2 ist beispielhaft angedeutet, dass eine Minimalverzögerung $z_{min}$ und eine Maximalverzögerung $z_{max}$ aus den y-Werten der Kennlinien $z_{Kmin}$ und $z_{Kmax}$ bei einer bestimmten Fahrzeug-Soll-Verzögerung $z_{Soll}$ (x-Wert) folgt.

Dieser erste Bereich B1 wird durch die Minimalverzögerungs-Kennlinie $z_{Kmin}$ bestimmt, die beispielsweise eine gesetzlich festgelegte Mindestbremsung in Abhängigkeit der Fahrzeug-Soll-Verzögerung $z_{Soll}$ vorgeben kann. D. h. unterhalb der Minimalverzögerungs-Kennlinie $z_{Kmin}$ wird aus Sicherheitsgründen eine Abbremsung forciert - es sei denn, die übergeordnete ABS-Regelung greift ein.

Liegt die Fahrzeug-Ist-Verzögerung $z_{Ist}$ bei einer bestimmten Fahrzeug-Soll-Verzögerung $z_{Soll}$ in dem dritten Bereich B3, d. h. die Fahrzeug-Ist-Verzögerung $z_{Ist}$ ist größer als die Maximalverzögerung $z_{max}$, die aus der Maximalverzögerungs-Kennlinie $z_{Kmax}$ für die Fahrzeug-Soll-Verzögerung $z_{Soll}$ folgt, werden die Einlassventile 11, 13 und die Auslassventile 12, 14 so angesteuert, dass der Hinterachs-Bremsdruck $p_{HA}$ limitiert wird.

Somit ist nicht erlaubt, den Hinterachs-Bremsdruck $p_{HA}$ weiter zu erhöhen selbst dann, wenn die durch den Fahrer vorgegebene Fahrzeug-Soll-Verzögerung $z_{Soll}$ erhöht wird; es sei denn durch die steigende Fahrzeug-Soll-Verzögerung $z_{Soll}$ verschiebt sich die Fahrzeug-Ist-Verzögerung $z_{Ist}$ wieder in den ersten oder zweiten Bereich B1, B2. Im dritten Bereich B3 kann das Fahrzeug 200 also lediglich durch die vorderen Radbremsen 7, 8, in deren Bremsverhalten die Fahrzeugverzögerungsregelung nicht eingreift, stärker verzögert werden, indem der Vorderachs-Bremsdruck $p_{VA}$ weiter erhöht wird.

Der Hinterachs-Bremsdruck $p_{HA}$ und somit die Bremskraft der hinteren Radbremsen 5, 6 wird also in Abhängigkeit der Fahrzeug-Ist-Verzögerung $z_{Ist}$ auf einen bestimmten Wert begrenzt, der durch die Maximalverzögerungs-Kennlinie $z_{Kmax}$ vorgegeben ist. Durch das Regeln auf diese harmonisch verlaufende Maximalverzögerungs-Kennlinie $z_{Kmax}$ kann ein für den Fahrer angenehmes Bremsgefühl erreicht werden.

Liegt die Fahrzeug-Ist-Verzögerung $z_{Ist}$ zwischen der Maximalverzögerungs-Kennlinie $z_{Kmax}$ und der Minimalverzögerungs-Kennlinie $z_{Kmin}$, d. h. im zweiten Bereich B2 ist sowohl ein Erhöhen als auch ein Halten des Hinterachs-Bremsdruckes $p_{HA}$ erlaubt, um das Fahrzeug 200 zu verzögern.

Gemäß diesem Ausführungsbeispiel wird in dem zweiten Bereich B2 die Fahrzeug-Ist-Verzögerung $z_{Ist}$ zusätzlich in Abhängigkeit eines Ist-Differenzschlupfes $DS_{Ist}$ geregelt, indem der Hinterachs-Bremsdruck $p_{HA}$ je nach Höhe eines tatsächlich vorliegenden Ist-Differenzschlupfes $DS_{Ist}$ gehalten oder erhöht wird. Somit wird eine Differenzschlupfregelung (DSR) durchgeführt.

Als Differenzschlupf wird gemäß der Ausführungsform der Unterschied zwischen einem Drehverhalten der Vorderräder 3, 4 und einem Drehverhalten der Hinterräder 1, 2 verstanden. Das Drehverhalten wird gemäß diesem Beispiel durch einen Vorderachs-Bremsschlupf $DS_{VA}$ bzw. einem Hinterachs-Bremsschlupf $DS_{HA}$ charakterisiert, die beide aus dem Mittelwert der Bremsschlüpfe der einzelnen Räder 1, 2, 3, 4 der jeweiligen Fahrzeugachse VA, HA folgen.

Gemäß dieser Ausführungsform wird der Ist-Differenzschlupf $DS_{Ist}$ aus dem Vorderachs-Bremsschlupf $DS_{VA}$ und dem Hinterachs-Bremsschlupf $DS_{HA}$ wie folgt gebildet:

$$DS_{Ist} \sim (DS_{HA}-DS_{VA})/DS_{HA}*100\%; \qquad (1.1)$$

der Unterschied im Drehverhalten der Fahrzeugachsen VA, HA ist somit durch eine Abweichung des Vorderachs-Bremschlupfes $DS_{VA}$ vom Hinterachs-Bremsschlupf $DS_{HA}$ definiert, die sich insbesondere erhöht, wenn die Hinterachse HA im Gegensatz zur Vorderachse VA überbremst ist, d. h. eher dazu neigt zu schlüpfen.

Eine alternative Berechnungsmethode des Drehverhaltens der Hinterräder 1, 2 relativ zum Drehverhalten der Vorderräder 3, 4 ist, den Ist-Differenzschlupf $DS_{Ist}$ aus Drehgeschwindigkeiten $v_{VA}$ bzw. $v_{HA}$ der Fahrzeugachsen VA, HA zu bestimmen, d. h.

$$DS_{Ist} \sim (v_{VA}-v_{HA})/v_{VA}*100\%, \qquad (1.2)$$

wobei die Drehgeschwindigkeiten $v_{VA}$ bzw. $v_{HA}$ beispielsweise aus einem Mittelwert der Drehgeschwindigkeiten der Räder 1, 2, 3, 4 der jeweiligen Fahrzeugachse VA, HA folgen können.

Die beiden oben genannten Formeln 1.1 und 1.2 sind lediglich beispielhaft, um eine den Unterschied im Drehverhalten charakterisierende Größe zu erhalten. Es können aber auch andere Abhängigkeiten verwendet werden, die diesen Unterschied charakterisieren.

Für die Differenzschlupfregelung ist vorgesehen, dass die FV-Steuereinrichtung 15 nach Betätigung des Bremsventils 9.2 und vorliegender Fahrzeug-Soll-Verzögerung $z_{Soll}$ ständig den Ist-Differenzschlupf $DS_{Ist}$ bestimmt. Weicht der Ist-Bremsschlupf $DS_{Ist}$ von einem Soll-Bremsschlupf $DS_{Soll}$ ab, wobei bei ungetakteten ABS-Bremsventilen 11, 12, 13, 14 ein vorbestimmter Toleranzwert $DS_T$ einbezogen werden kann, und liegt die Fahrzeug-Ist-Verzögerung $z_{Ist}$ im zweiten Bereich B2, so steuert die FV-Steuereinrichtung 15 die ABS-Bremsventile 11, 12, 13, 14 der Hinterräder 1, 2 derartig an, dass der Ist-Differenzschlupf $DS_{Ist}$ wieder innerhalb der Toleranz $DS_T$ dem Soll-Differenzschlupf $DS_{Soll}$ entspricht:

Liegt der Ist-Differenzschlupf $DS_{Ist}$ unterhalb des Soll-Differenzschlupfes $DS_{Soll}$, ist die Hinterachse HA bezogen auf den Soll-Differenzschlupf $DS_{Soll}$ relativ zur Vorderachse VA unterbremst. In diesem Fall werden die ABS-Einlassventile 11, 13 geöffnet, so dass der Hinterachs-Bremsdruck $p_{HA}$ erhöht wird. Liegt der Ist-Differenzschlupf $DS_{Ist}$ oberhalb des Soll-Differenzschlupfes $DS_{Soll}$ ist der Hinterachs-Bremsschlupf $DS_{HA}$ bezogen auf den Soll-Differenzschlupf $DS_{Soll}$ größer als der Vorderachs-Bremsschlupf $DS_{VA}$, d. h. die Hinterachse HA ist überbremst. In diesem Fall wird der Hinterachs-Bremsdruck $p_{HA}$ limitiert, so dass die Bremswirkung an den Hinterrädern 1, 2 nicht weiter erhöht wird.

Der Soll-Differenzschlupf $DS_{Soll}$, auf den eingeregelt wird, ist gemäß dieser Ausführungsform abhängig von der Fahrzeug-Ist-Verzögerung $z_{Ist}$, wie in Fig. 3 dargestellt. Bei geringen Fahrzeug-Ist-Verzögerungen $z_{Ist}$ ist der Soll-Differenzschlupf $DS_{Soll}$ zunächst konstant und liegt bei einem bestimmtem Offset-Differenzschlupf $DS_{Off}$. Der Offset-Differenzschlupf $DS_{Off}$ wird gemäß dieser Ausführungsform zu Beginn einer Bremsung, d. h. wenn noch keine Bremskräfte der Radbremsen 5, 6, 7, 8 wirken, bestimmt, so dass insbesondere ein Motorschleppmoment und ein Verschleiß der Räder 1, 2, 3, 4 berücksichtigt werden. Der Offset-Differenzschlupf $DS_{Off}$ ist bei einer Berechnung des Ist-Differenzschlupfes $DS_{Ist}$ gemäß den Formeln 1.1 oder 1.2 positiv, wenn die Hinterachse HA die durch den Motor des Fahrzeuges 100 angetriebene Achse ist, da sich die Hinterachse HA durch das Motorschleppmoment langsamer dreht. Vom Offset-Differenzschlupf $DS_{Off}$ ausgehend fällt der Soll-Differenzschlupf $DS_{Soll}$ in Richtung Null ab.

Liegt der Ist-Differenzschlupf beispielsweise zu Beginn der Differenzschlupfregelung oberhalb des Soll-Differenzschlupfes $DS_{Soll}$ und auch oberhalb der Toleranz $DS_T$ am Punkt $DS_1$, wird der Hinterachs-Bremsdruck $p_{HA}$ zunächst limitiert. Gemäß diesem Ausführungsbeispiel ist lediglich eine Toleranz $DS_T$ oberhalb des Soll-Differenzschlupfes $DS_{Soll}$ vorgesehen. Alternativ oder zusätzlich kann aber auch eine Toleranz $DS_T$ unterhalb des Soll-Differenzschlupfes $DS_{Soll}$ vorgesehen sein. Wird vom Fahrer durch weitere Betätigung des Bremsventils 9.2 eine höhere Fahrzeug-Soll-Verzögerung $z_{Soll}$ angefordert, wird das Fahrzeug 200 zusätzlich nur noch mit den vorderen Radbremsen 7, 8 abgebremst, die Fahrzeug-Ist-Verzögerung $z_{Ist}$ steigt. Dadurch verschiebt sich der Ist-Differenzschlupf $DS_{Ist}$ vom Punkt $DS_1$ zum Punkt $DS_2$ beispielsweise genau auf die $DS_{Soll}$-Kurve, so dass die Limitierung des Hinterachs-Bremsdruckes $p_{HA}$ aufgehoben und der Hinterachs-Bremsdruck $p_{HA}$ gepulst erhöht wird. Durch die zusätzliche Bremswirkung der hinteren Radbremsen 5, 6 verschiebt sich nun im weiteren Verlauf der Bremsung der Punkt $DS_2$ in Richtung steigender Fahrzeug-Ist-Verzögerung $z_{Ist}$ wieder in Richtung oberhalb der $DS_{Soll}$-Kurve zum Punkt $DS_3$. Erreicht der Ist-Differenzschlupf $DS_{Ist}$ den Toleranzwert $DS_T$ bzw. liegt leicht drüber, wird eine weiteres Druckerhöhen an den hinteren Radbremsen 5, 6 gesperrt, der Hinterachs-Bremsdruck $p_{HA}$ wird wieder limitiert.

Bei steigender Fahrzeug-Ist-Verzögerung $z_{Ist}$ fällt der Soll-Differenzschlupf $DS_{Soll}$ zu kleineren Werten ab. Dadurch wird dem Umstand Rechnung getragen, dass die Hinterachse HA bei hohen Verzögerungen des Fahrzeuges 200 und insbesondere einer geringen oder hohen Beladung, einem hohen Beladungsschwerpunkt und kurzem Radstand tendenziell überbremst ist, d. h. eher dazu neigt, zu schlüpfen, d. h. der Ist-Differenzschlupf $DS_{Ist}$ verschiebt sich tendenziell zu höheren Werten, wenn der Ist-Differenzschlupf $DS_{Ist}$ nach einer der beiden Formeln 1.1 oder 1.2 berechnet wird. Ziel des Verfahrens ist es somit, bei hoher Verzögerung, zu der die Vorderachse VA ohne Druckbegrenzung beiträgt, an der Hinterachse HA länger eine Bremskraftlimitierung vorzunehmen und ein Drückerhöhen zu sperren. Ein Schlüpfen der Hinterachse HA und ein dadurch bedingtes Eingreifen der übergeordneten ABS-Regelung kann vermieden werden und die Bremsung wird ruhiger und sicherer.

Wird in Folge der Differenzschlupfregelung oder aus anderen Gründen der zweite Bereich B2 in Richtung des ersten Bereiches B1 verlassen, wird die Differenzschlupfregelung in vorteilhafter Weise gepulst abgebrochen und der Hinterachs-Bremsdruck $p_{HA}$ erhöht. Wird der zweite Bereich B2 in Richtung des dritten Bereiches B3 verlassen, wird der Hinterachs-Bremsdruck $p_{HA}$ limitiert bzw. gehalten.

Gemäß einer Ausführungsform können für den Fall, dass im dritten Bereich B3 ein Ist-Differenzschlupf $DS_{Ist}$ größer als der Soll-Differenzschlupf $DS_{Soll}$, d. h. die Hinterachse HA überbremst ist, vorliegt, die Auslassventile 12, 14 auch geöffnet werden, so dass ein Druckabbau an den hinteren Radbremsen 5, 6 stattfindet, um möglichst schnell die Maximalverzögerungs-Kennlinie $z_{Kmax}$ zu erreichen bzw. zu unterschreiten und das Überbremsen der Hinterachse HA zu verringern.

Die FV-Steuereinrichtung 15 greift auch bei der Regelung des Ist-Differenzschlupfes $DS_{Ist}$ nicht in das Bremsverhalten der vorderen Radbremsen 7, 8 ein.

Durch die Differenzschlupfregelung wird eine elektronische Bremskraft- bzw. Bremsdruckverteilung in Abhängigkeit der Achslasten auf der Vorderachse VA und der Hinterachse HA wie folgt bewirkt:

Ist das Fahrzeug 200 unbeladen, d. h. auf die Hinterachse HA wirkt eine geringe Gewichtskraft, neigen die Hinterräder 1, 2 bei gleicher Bremsbetätigung bzw. bei einer vorgegebenen Fahrzeug-Soll-Verzögerung $z_{Soll}$ eher zu einem Blockieren als bei einem voll beladenen Fahrzeug 200 mit höherem Gewicht auf der Hinterachse HA. Dies resultiert daraus, dass die Hinterräder 1, 2 durch das hohe Gewicht im beladenen Zustand stärker auf den Untergrund gedrückt werden. Auf die Vorderachse VA hat die Beladung aufgrund des hohen Motorengewichts zumindest keinen signifikanten Einfluss.

Der Ist-Differenzschlupf $DS_{Ist}$ variiert somit in Abhängigkeit der Beladung des Fahrzeuges 200 bei einer bestimmten Fahrzeug-Soll-Verzögerung $z_{Soll}$. Die Differenzschlupfregelung kann zwar die auf die Hinterachse HA wirkende Gewichtskraft nicht direkt messen, sie steuert jedoch immer zu dem Zeitpunkt die ABS-Ventile 11, 12, 13, 14 an, zu dem sich der beladungsabhängige Ist-Differenzschlupf $DS_{Ist}$ vom Soll-Differenzschlupf $DS_{Soll}$ um mindestens die Toleranz $DS_T$ unterscheidet. Da die FV-Steuereinrichtung 15 den Vorderachs-Bremsdruck $p_{VA}$ nicht regelt, wird von der Differenzschlupfregelung indirekt eine Verteilung der Bremskräfte auf die Fahrzeugachsen VA, HA in Abhängigkeit der Beladung erreicht. Somit kann aus dem Ist-Differenzschlupf $DS_{Ist}$ auf eine Beladung des Fahrzeuges 200 geschlossen werden.

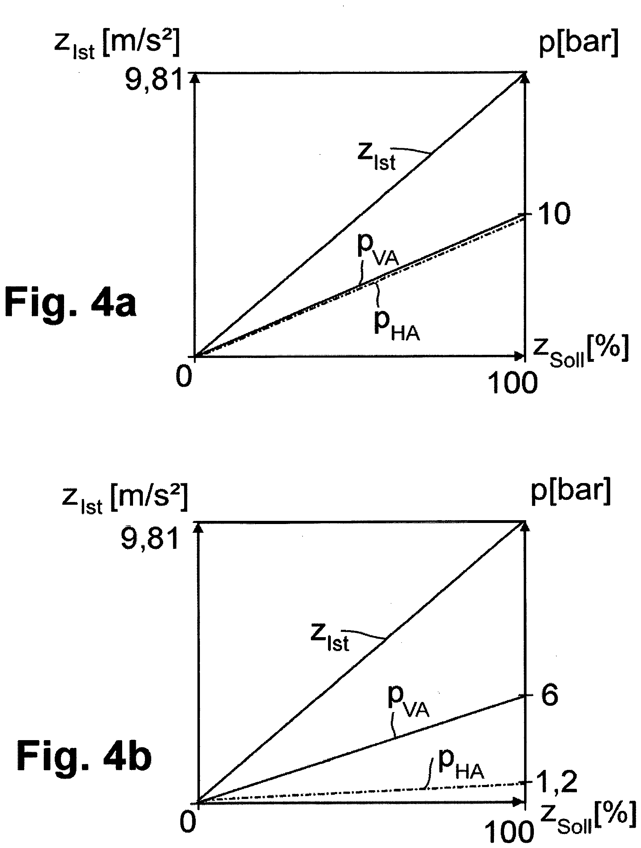

Dies kann bei unterschiedlichen Beladungen zu den in Fig. 4a und 4b gezeigten Situationen führen:

Ist das Fahrzeug 200 voll beladen, so verteilt sich die Bremskraft auf beide Fahrzeugachsen HA, VA in etwa gleichmäßig, wie in dem Ausführungsbeispiel der Fig. 4a dargestellt. D. h. in Abhängigkeit der Fahrzeug-Soll-Verzögerung $z_{Soll}$ werden die vorderen und die hinteren Radbremsen 5, 6, 7, 8 in etwa mit demselben Bremsdruck $p_{VA}$, $p_{HA}$ beaufschlagt, um eine Fahrzeug-Ist-Verzögerung $z_{Ist}$ zu bewirken, die bei $z_{Soll} = 100\%$ beispielsweise $z_{Ist}=1g$ ($g= 9{,}81$ m/s$^2$) entspricht, wenn die vorderen und hinteren Radbremsen 5, 6, 7, 8 jeweils mit einem Bremsdruck von $p_{VA} = p_{HA} =10$bar beaufschlagt werden.

Ist das Fahrzeug 200 weniger als voll beladen, z.B. unbeladen wie im Ausführungsbeispiel in Fig. 4b dargestellt, und weist im unbeladenen Zustand eine Masse auf, die ca. einem Drittel der Masse des voll beladenen Fahrzeuges 200 beträgt, wird wie in Fig. 4b dargestellt ein größerer Teil der Bremsung von den vorderen Radbremsen 7, 8 bewirkt. In diesem Beispiel wird bei einer Fahrzeug-Soll-Verzögerung $z_{Soll}$ von 100% (entspricht gemäß obigem Beispiel 1g mit $g= 9{,}81$ m/s$^2$) ein Vorderachs-Bremsdruck $p_{VA}$ von 6 bar und ein Hinterachs-Bremsdruck $p_{HA}$ von lediglich 1,2 bar eingestellt, um eine der Fahrzeug-Soll-Verzögerung $z_{Soll}$ entsprechende Fahrzeug-Ist-Verzögerung $z_{Ist}$ von 100% wie in Fig. 4a für den voll beladenen Zustand zu erreichen. Die Vorderachse VA wird weniger und die Hinterachse HA erheblich weniger stark abgebremst, wodurch ein frühzeitiges Blockieren bei geringer Beladung der Vorderachse VA und insbesondere der Hinterachse HA vermieden werden kann.

Die Maximalverzögerungs-Kennlinie $z_{Kmax}$ und die Minimalverzögerungs-Kennlinie $z_{Kmin}$ können in der FV-Steuereinrichtung 15 gespeichert sein, wobei zumindest die Maximalverzögerungs-Kennlinie $z_{Kmax}$ in Abhängigkeit der Beladung variieren kann. Die Maximalverzögerungs-Kennlinie $z_{Kmax}$ verschiebt sich dabei wie in Fig. 2 gestrichelt angedeutet zu höheren Fahrzeug-Ist-Verzögerungen $z_{Ist}$ hin, so dass der dritte Bereich B3 verkleinert wird, d. h. für eine bestimmten Fahrzeug-Soll-Verzögerung $z_{Soll}$ wird der Hinterachs-Bremsdruck $p_{HA}$ erst bei einer höheren Fahrzeug-Ist-Verzögerung $z_{Ist}$ gehalten. Das Fahrzeug 200 wird also im unbeladenen Zustand bei gleicher Fahrzeug-Soll-Verzögerung $z_{Soll}$ stärker verzögert als im beladenen Zustand. Somit kann dem Fahrer durch die Verschiebung der Maximalverzögerungs-Kennlinie $z_{Kmax}$ der Beladungszustand vermittelt werden, so dass dieser entsprechend reagieren kann.

Zur Messung des Beladungszustandes kann ein ECAS-System vorgesehen sein, das die Luftfederung des Fahrzeuges 200 elektronisch regelt und dazu einen nicht dargestellten Wegsensor aufweist, der den Weg zwischen der Hinterachse HA und einem Bezugspunkt am Fahrzeug 200 in Abhängigkeit der Beladung misst. Weiterhin kann auch eine mechanisch-elektronische achslastabhängige Bremsdruckverteilungseinrichtung (ALB) den Wert der Beladung liefern, die ebenfalls von einem Wegsensor oder einem Drucksensor gesteuert wird. Beide Systeme, d. h. ECAS und ALB, können beispielsweise über den CAN-BUS den von diesen Systemen erfassten Beladungszustand an die FV-Steuereinrichtung 15 übermitteln, die in Abhängigkeit davon die Maximalverzögerungs-Kennlinie $z_{Kmax}$ auswählt.

Es ist aber auch möglich, dass die FV-Steuereinrichtung 15 den Beladungszustand selbst ermittelt. Dazu kann die Beladung anhand des gemessenen Ist-Differenzschlupfes $DS_{Ist}$ wie oben beschrieben bestimmt werden und daraus der Beladungszustand ermittelt werden. Alternativ kann im Fahrzeug 200 auch ein weiterer Wegsensor zwischen einem fahrzeugfesten Rahmen und den Fahrzeugachsen HA, VA angeordnet sein, dessen beladungsabhängiger Verstellweg von der FV-Steuereinrichtung erfasst werden kann. Aus dem Verstellweg kann auf die Beladung des Fahrzeuges geschlossen werden.

Alternativ können von einem nicht dargestellten Motorsteuergerät über den CAN-Bus Leistungsdaten des Motors sowie Fahrzeugbeschleunigungsdaten übermittelt werden, aus denen die FV-Steuereinrichtung 15 auf eine Masse des Fahrzeuges 200 und somit auf eine zusätzliche Beladung gegenüber einem Leergewicht des Fahrzeuges 200 schließen kann. Dabei kann auch berücksichtigt werden, ob ein Anhänger an das Fahrzeug 200 angekuppelt ist, der anteilmäßig an der ermittelten Masse des Fahrzeugs 200 beteiligt sein kann und der das Fahrverhalten an der Hinterachse HA zusätzlich beeinflussen kann. Diese Information kann über den CAN-BUS von einer Anhänger-Steuereinrichtung übertragen werden. Weiterhin kann ein Verhalten einer Antriebsschlupfregelung berücksichtigt werden, aus dem ebenfalls ein Beladungszustand ermittelt werden kann.

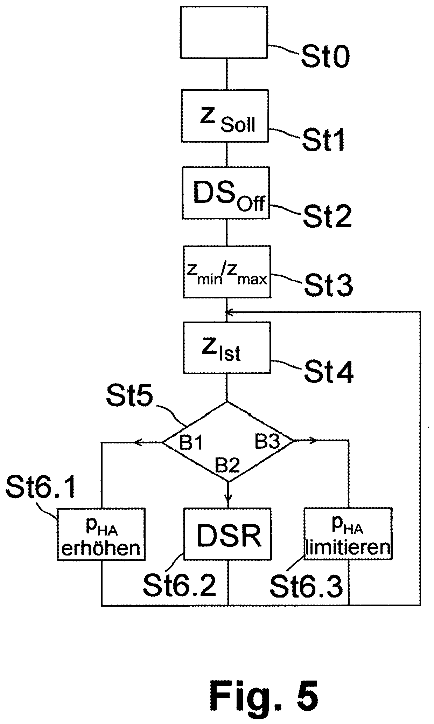

Erfindungsgemäß wird das Verfahren zur elektronischen Bremsdruckregelung gemäß Fig. 5 wie folgt durchgeführt. In einem Schritt St0 wird die Bremsung gestartet, z.B. durch Betätigung des Bremsventils 9.2 durch den Fahrer. In einem ersten Schritt St1 wird mit dem Bremswertgeber 9.3 die Fahrzeug-Soll-Verzögerung $z_{Soll}$ in Abhängigkeit der Betätigung des Bremsventils 9.2 erfasst, wobei entweder ein Betätigungsweg des Bremsventils 9.2 oder ein durch Betätigung des Bremsventils 9.2 ausgesteuerter Hinterachs- oder Vorderachs-Bremsdruck $p_{HA}$, $p_{VA}$ erfasst wird.

In einem zweiten Schritt St2 wird zu Beginn der Bremsung, d. h. wenn noch keine Bremskräfte wirken, ein Offset-Differenzschlupf $DS_{Off}$ festgelegt. Dieser Offset-Differenzschlupf $DS_{Off}$ kann sich aufgrund eines Motorschleppmoments oder einem Verschleiß der Räder 1, 2, 3, 4 und somit variierenden Radumfängen von Null unterscheiden.

In einem dritten Schritt St3 wird in Abhängigkeit der Beladung des Fahrzeuges 200 eine gespeicherte Maximalverzögerung-Kennlinie $z_{Kmax}$ ausgewählt. Weiterhin wird auch eine Minimalverzögerungs-Kennlinie $z_{Kmin}$ festgelegt. Für die erfasste Fahrzeug-Soll-Verzögerung $z_{Soll}$ ergeben sich somit aus den Kennlinien $z_{Kmax}$, $z_{Kmin}$ Werte für die Maximalverzögerung $z_{max}$ und die Minimalverzögerung $z_{min}$, die der folgenden elektronischen Fahrzeugverzögerungsregelung zugrunde gelegt werden.

In einem vierten Schritt St4 wird die Fahrzeug-Ist-Verzögerung $z_{Ist}$ erfasst. Diese folgt beispielsweise aus einem nicht dargestellten Beschleunigungssensor oder aus der Ableitung einer ermittelten Fahrzeugreferenzgeschwindigkeit $V_{ref}$, die beispielsweise aus einem Mittelwert der Drehgeschwindigkeiten der Räder 1, 2, 3, 4 bestimmt werden kann.

In einem fünften Schritt St5 wird der im vierten Schritt St4 bestimmten Fahrzeug-Ist-Verzögerung $z_{Ist}$ von der FV-Steuereinrichtung 15 in Abhängigkeit der Fahrzeug-Soll-Verzögerung $z_{Soll}$ ein Bereich B1, B2, B3 des Diagramms gemäß Fig. 2 zugeordnet bzw. verglichen, ob die Fahrzeug-Ist-Verzögerung $z_{Ist}$ größer oder kleiner als die Maximalverzögerung $z_{max}$ bzw. die Minimalverzögerung $z_{min}$ ist.

Liegt die Fahrzeug-Ist-Verzögerung $z_{Ist}$ im ersten Bereich B1, d. h. ist sie kleiner als die Minimalverzögerung $z_{min}$ werden in einem folgenden Schritt St6.1 die Einlassventile 11, 13 der zu regelnden Fahrzeugachse - hier der HA - geöffnet und die Auslassventile 12, 14 geschlossen, so dass der Hinterachs-Bremsdruck $p_{HA}$ erhöht wird.

Liegt die Fahrzeug-Ist-Verzögerung $z_{Ist}$ im zweiten Bereich B2, d. h. ist sie kleiner als die Maximalverzögerung $z_{max}$ und größer als die Minimalverzögerung $z_{min}$ werden in einem Schritt 6.2 die Einlassventile 11, 13 in Abhängigkeit des Ist-Differenzschlupfes $DS_{Ist}$, der vorzugsweise während der gesamten Bremsung von der FV-Steuereinrichtung 15 bestimmt wird, derartig angesteuert, dass dieser innerhalb der Toleranz $DS_T$ dem in der FV-Steuereinrichtung 15 hinterlegten Soll-Differenzschlupf $DS_{Soll}$ entspricht, der zumindest zu Beginn der Bremsung gleich dem im zweiten Schritt St2 festgelegten Offset-Differenzschlupf $DS_{Off}$ ist und der sich während der Bremsung fahrzeugverzögerungsabhängig verändern kann.

Im dritten Bereich B3 werden in einem Schritt St6.3 die Einlassventile 11, 13 und die Auslassventile 12, 14 geschlossen, so dass der Hinterachs-Bremsdruck $p_{HA}$ gehalten wird. Die Bremskraft der hinteren Radbremsen 5, 6 wird also in Abhängigkeit der Fahrzeug-Soll-Verzögerung $z_{Soll}$ auf einen bestimmten, fahrzeugverzögerungsabhängigen Wert begrenzt, der durch die Maximalverzögerungs-Kennlinie $z_{Kmax}$ bzw. die Maximalverzögerung $z_{max}$ vorgegeben ist.

Nach den Schritten St6.1, St6.2 oder St6.3 beginnt die elektronische Fahrzeugverzögerungsregelung innerhalb einer Bremsung wieder mit dem vierten Schritt St4. Somit wird bei einer Bremsung ständig die erfasste Fahrzeug-Ist-Verzögerung $z_{Ist}$ einem Bereich zugeordnet und der Hinterachs-Bremsdruck $p_{HA}$ entsprechend eingestellt.

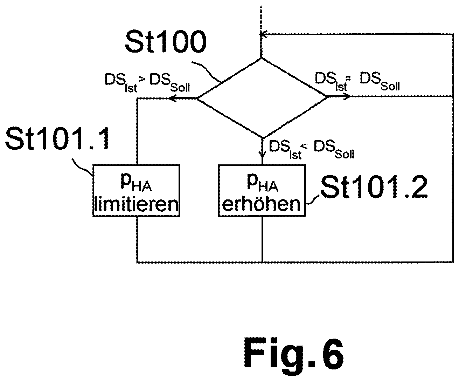

Die Differenzschlupfregelung im Schritt St6.2 verläuft gemäß Fig. 6 wie folgt:
In einem Schritt St100 wird der Ist-Differenzschlupf $DS_{Ist}$ mit dem Soll-Differenzschlupf $DS_{Soll}$ verglichen, der in der FV-Steuereinrichtung 15 wie in Fig. 3 dargestellt hinterlegt ist und bei dem der in Schritt St2 der Fahrzeugverzögerungsregelung bestimmte Offset-Differenzschlupf $DS_{Off}$ berücksichtigt wird.

Ist der Ist-Differenzschlupf $DS_{Ist}$ größer als der Soll-Differenzschlupf $DS_{Soll}$, ist die Hinterachse HA relativ zur Vorderachse VA überbremst. Liegt der Ist-Differenzschlupf $DS_{Ist}$ in diesem Fall oberhalb der Toleranz $DS_T$ veranlasst die FV-Steuereinrichtung 15 in einem Schritt St101.1 ein Limitieren des Hinterachs-Bremsdruckes $p_{HA}$, so dass die Bremskraft der hinteren Radbremsen 5, 6 der Hinterachse HA nicht weiter erhöht wird. Ist der Ist-Differenzschlupf $DS_{Ist}$ kleiner als der Soll-Differenzschlupf $DS_{Soll}$ bzw. kleiner als die Toleranz $DS_T$, wird von der FV-Steuereinrichtung 15 in einem Schritt St101.2 ein Erhöhen des Hinterachs-Bremsdruckes $p_{HA}$ angefordert, da die Hinterachse HA relativ zur Vorderachse VA unterbremst ist. Ist der Ist-Differenzschlupf $DS_{Ist}$ innerhalb der Toleranz $DS_T$ gleich dem Soll-Differenzschlupf $DS_{Soll}$ beginnt das Verfahren von vorn; die Blockierneigung der Hinterachse HA wurde an die Blockierneigung der Vorderachse VA angepasst.

Bezugszeichenliste (Bestandteil der Beschreibung)

| | |
|---|---|
| 1, 2 | Hinterräder |
| 3, 4 | Vorderräder |
| 5, 6 | hintere Radbremsen |
| 7, 8 | vordere Radbremsen |
| 9.1 | Bremszylinder |
| 9.2 | zweikreisiges Bremsventil |
| 9.3 | Drucksensor/Bremswertgeber |
| 10 | ABS-Steuereinrichtung |
| 11, 13 | ABS-Einlassventile hintere Radbremsen 5, 6 |
| 12, 14 | ABS-Auslassventile hintere Radbremsen 5, 6 |
| 15 | FV-Steuereinrichtung |
| 100 | Bremssystem |
| 101 | EBS-Steuereinrichtung |
| 200 | Fahrzeug |

| | |
|---|---|
| B1, B2, B3 | erster, zweiter und dritter Bereich |
| DSR | Differenzschlupfregelung |
| $DS_{Ist}$ | Ist-Differenzschlupf |
| $DS_{Soll}$ | Soll-Bremsschlupf |

| | |
|---|---|
| $DS_{Off}$ | Offset-Differenzschlupf |
| $DS_{HA}$ | Hinterachs-Bremsschlupf |
| $DS_{VA}$ | Vorderachs-Bremsschlupf |
| $DS_T$ | Toleranzwert Differenzschlupf |
| HA | Hinterachse |
| p | Bremsdruck |
| $p_{VA}$ | Vorderachs-Bremsdruck |
| $p_{HA}$ | Hinterachs-Bremsdruck |
| VA | Vorderachse |
| $V_{VA}$ | Drehgeschwindigkeit Vorderachse VA |
| $V_{HA}$ | Drehgeschwindigkeit Hinterachse HA |
| $z_{Kmax}$ | Maximalverzögerungs-Kennlinie |
| $z_{Kmin}$ | Minimalverzögerungs-Kennlinie |
| $z_{max}$ | Maximalverzögerung |
| $z_{min}$ | Minimalverzögerung |
| $z_{Soll}$ | Fahrzeug-Soll-Verzögerung |
| $z_{Ist}$ | Fahrzeug-Ist-Verzögerung |

**Patentansprüche**

1. Verfahren zum Regeln einer Fahrzeugverzögerung in einem Fahrzeug (200) mit einem ABS-Bremssystem (100), mit mindestens den folgenden Schritten:

   Erfassen einer vom Fahrer vorgegebenen Fahrzeug-Soll-Verzögerung ($z_{Soll}$) (St1),
   Festlegen einer Maximalverzögerung ($z_{max}$) sowie einer Minimalverzögerung ($z_{min}$) jeweils in Abhängigkeit der erfassten Fahrzeug-Soll-Verzögerung ($z_{Soll}$) (St3),
   Erfassen einer Fahrzeug-Ist-Verzögerung ($z_{Ist}$) (St4) und Regeln eines Bremsdruckes ($p_{HA}$, $p_{VA}$) an Radbremsen (5, 6, 7, 8) einer zu regelnden Fahrzeugachse (HA, VA) in Abhängigkeit der erfassten Fahrzeug-Ist-Verzögerung ($z_{Ist}$) durch Ansteuern von ABS-Bremsventilen (11, 12, 13, 14) derartig, dass

   - der Bremsdruck ($p_{HA}$, $p_{VA}$) an den Radbremsen (5, 6, 7, 8) der zu regelnden Fahrzeugachse (HA, VA) erhöht wird, wenn die Fahrzeug-Ist-Verzögerung ($z_{Ist}$) kleiner ist als die Minimalverzögerung ($z_{min}$) zum Erreichen einer Mindest-Bremswirkung (St6.1), und
   - der Bremsdruck ($p_{HA}$, $p_{VA}$) an den Radbremsen (5, 6, 7, 8) der zu regelnden Fahrzeugachse (HA, VA) limitiert wird, wenn die Fahrzeug-Ist-Verzögerung ($z_{Ist}$) größer ist als die Maximalverzögerung ($z_{max}$) zum Limitieren der Bremswirkung der zu regelnden Fahrzeugachse (HA, VA) (St6.3).

2. Verfahren nach Anspruch 1, **dadurch gekennzeichnet, dass** die Maximalverzögerung ($z_{max}$) anhand einer Maximalverzögerungs-Kennlinie ($z_{Kmax}$) und die Minimalverzögerung ($z_{min}$) anhand einer Minimalverzögerungs-Kennlinie ($z_{Kmin}$) festgelegt werden, die jeweils eine Abhängigkeit der Maximalverzögerung ($z_{max}$) bzw. Minimalverzögerung ($z_{min}$) von der Fahrzeug-Soll-Verzögerung ($z_{Soll}$) darstellen.

3. Verfahren nach Anspruch 2, **dadurch gekennzeichnet, dass** die Maximalverzögerungs-Kennlinie ($z_{Kmax}$) abhängig von einer Beladung des Fahrzeuges (200) ist.

4. Verfahren nach Anspruch 3, **dadurch gekennzeichnet, dass** die Beladung des Fahrzeuges (200) mit einem Achslastsensor gemessen wird oder aus einem erfassten Ist-Differenzschlupf ($DS_{Ist}$) hergeleitet wird.

5. Verfahren nach Anspruch 3 oder 4, **dadurch gekennzeichnet, dass** die Maximalverzögerungs-Kennlinie ($z_{Kmax}$) bei geringer Beladung stärker ansteigt, so dass der Bremsdruck ($p_{HA}$, $p_{VA}$) bei geringer Beladung des Fahrzeuges (200) bei höheren erfassten Fahrzeug-Ist-Verzögerungen ($z_{Ist}$) limitiert wird im Gegensatz zu einer hohen Beladung des Fahrzeuges (200).

6. Verfahren nach einem der Ansprüche 2 bis 5, **dadurch gekennzeichnet, dass** die Maximalverzögerungs-Kennlinie ($z_{Kmax}$) einen harmonischen Verlauf ohne Abstufungen aufweist zum Limitieren des Bremsdruckes ($p_{HA}$, $p_{VA}$) ohne das Fahrzeug (200) rückartig zu verzögern.

7. Verfahren nach einem der vorhergehenden Ansprüche, **dadurch gekennzeichnet, dass** der Bremsdruck ($p_{HA}$, $p_{VA}$) an den Radbremsen (5, 6, 7, 8) der zu regelnden Fahrzeugachse (HA, VA) gehalten oder gesenkt wird, wenn die Fahrzeug-Ist-Verzögerung ($z_{Ist}$) größer ist als die Maximalverzögerung ($z_{max}$).

8. Verfahren nach einem der vorhergehenden Ansprüche, **dadurch gekennzeichnet, dass** der Bremsdruck ($p_{HA}$, $p_{VA}$) an den Radbremsen (5, 6, 7, 8) der zu regelnden Fahrzeugachse (HA, VA) in Abhängigkeit eines erfassten Ist-Differenzschlupfes ($DS_{Ist}$) geregelt wird, wenn die Fahrzeug-Ist-Verzögerung ($z_{Ist}$) kleiner ist als die Maximalverzögerung ($z_{max}$) und größer als die Minimalverzögerung ($z_{min}$) (St6.2), wobei der Ist-Differenzschlupf ($DS_{Ist}$) den Unterschied in einem Drehverhalten der zu regelnden Fahrzeugachse (HA, VA) zu einer weiteren Fahrzeugachse (VA, HA) angibt.

9. Verfahren nach Anspruch 8, **dadurch gekennzeichnet, dass** der Ist-Differenzschlupf ($DS_{Ist}$) berechnet wird aus einer Differenz eines ermittelten Hinterachs-Bremsschlupfes ($DS_{HA}$) minus einem ermittelten Vorderachs-Bremsschlupf ($DS_{VA}$), vorzugsweise normiert auf den Hinterachs-Bremsschlupf ($DS_{HA}$), oder
einer Differenz einer ermittelten Vorderachs-Achsgeschwindigkeit ($V_{VA}$) minus einer ermittelten Hinterachs-Achsgeschwindigkeit ($V_{HA}$), vorzugsweise normiert auf die Vorderachs-Achsgeschwindigkeit ($V_{VA}$),
wobei die Hinterachse (HA) die durch einen Motor angetriebene Fahrzeugachse ist.

10. Verfahren nach Anspruch 8 oder 9, **dadurch gekennzeichnet, dass** der Bremsdruck ($p_{HA}$, $p_{VA}$) in Abhängigkeit des Ist-Differenzschlupfes ($DS_{Ist}$) derartig geregelt wird, dass der Ist-Differenzschlupf ($DS_{Ist}$) einem Soll-Differenzschlupf ($DS_{Soll}$) entspricht, wobei der Bremsdruck ($p_{HA}$, $p_{VA}$) an den Radbremsen (5, 6, 7, 8) der zu regelnden Fahrzeugachse (HA, VA) dazu

- limitiert wird, wenn die zu regelnde Fahrzeugachse (HA, VA) relativ zu der weiteren Fahrzeugachse (VA, HA) überbremst ist (St101.1), und
- erhöht wird, wenn die zu regelnde Fahrzeugachse (HA, VA) relativ zu der weiteren Fahrzeugachse (VA, HA) unterbremst ist (St101.2).

11. Verfahren nach einem der Ansprüche 8 bis 10, **dadurch gekennzeichnet, dass** der Bremsdruck ($p_{HA}$, $p_{VA}$) an den Radbremsen (5, 6, 7, 8) der zu regelnden Fahrzeugachse (HA, VA) in Abhängigkeit des Ist-Differenzschlupfes ($DS_{Ist}$) verringert wird, wenn die Fahrzeug-Ist-Verzögerung ($z_{Ist}$) größer ist als die Maximalverzögerung ($z_{max}$) und die zu regelnde Fahrzeugachse (HA, VA) relativ zu der weiteren Fahrzeugachse (VA, HA) überbremst ist.

12. Verfahren nach Anspruch 10 oder 11, **dadurch gekennzeichnet, dass** der Soll-Differenzschlupf ($DS_{Soll}$) abhängig von der erfassten Fahrzeug-Ist-Verzögerung ($z_{Ist}$) oder der Fahrzeug-Soll-Verzögerung ($z_{Soll}$) ist, wobei sich der Soll-Differenzschlupf ($DS_{Soll}$) bei steigender Fahrzeug-Ist-Verzögerung ($z_{Ist}$) oder steigender Fahrzeug-Soll-Verzögerung ($z_{Soll}$) in Richtung eines synchronen Raddrehverhaltens der Räder (1, 2, 3, 4) der zu regelnden Fahrzeugachse (HA, VA) und der weiteren Fahrzeugachse (VA, HA) verringert, so dass der Bremsdruck ($p_{HA}$, $p_{HA}$) an der zu regelnden Fahrzeugachse (VA, HA) bereits bei einem geringeren relativen Überbremsen limitiert wird.

13. Verfahren nach einem der Ansprüche 10 bis 12, **dadurch gekennzeichnet, dass**, falls die zu regelnde Fahrzeugachse die Hinterachse (HA) ist, der Bremsdruck ($p_{HA}$, $p_{VA}$) an hinteren Radbremsen (5, 6)

- limitiert wird, wenn der Ist-Differenzschlupf ($DS_{Ist}$) größer ist als der Soll-Differenzschlupf ($DS_{Soll}$), und
- erhöht wird, wenn der Ist-Differenzschlupf ($DS_{Ist}$) kleiner ist als der Soll-Differenzschlupf ($DS_{Soll}$), und
falls die zu regelnde Fahrzeugachse die Vorderachse (VA) ist, der Bremsdruck ($p_{HA}$, $p_{VA}$) an vorderen Radbremsen (5, 6)
- limitiert wird, wenn der Ist-Differenzschlupf ($DS_{Ist}$) kleiner ist als der Soll-Differenzschlupf ($DS_{Soll}$), und
- erhöht wird, wenn der Ist-Differenzschlupf ($DS_{Ist}$) größer ist als der Soll-Differenzschlupf ($DS_{Soll}$).

14. Verfahren nach einem der vorherigen Ansprüche, **dadurch gekennzeichnet, dass** die zu regelnde Fahrzeugachse eine Hinterachse (HA) des Fahrzeuges (200) oder eine Vorderachse (VA) des Fahrzeuges (200) ist.

15. Verfahren nach einem der vorherigen Ansprüche, **dadurch gekennzeichnet, dass** bei einem Limitieren des Bremsdruckes ($p_{HA}$, $p_{VA}$) an den Radbremsen (5, 6, 7, 8) der zu regelnden Fahrzeugachse (HA, VA) der Bremsdruck ($p_{HA}$, $p_{VA}$) lediglich gehalten oder verringert und nicht erhöht wird.

**16.** Vorrichtung (15) zum elektronischen Regeln einer Fahrzeugverzögerung in einem Fahrzeug (200) mit einem ABS-Bremssystem (100), insbesondere zur Durchführung eines Verfahrens nach einem der vorhergehenden Ansprüche, wobei die Vorrichtung (15) ausgebildet ist,
eine Maximalverzögerung ($z_{max}$) und eine Minimalverzögerung ($z_{min}$) in Abhängigkeit einer erfassten Fahrzeug-Soll-Verzögerung ($z_{Soll}$) auszuwählen, und
ABS-Bremsventile (11, 12, 13, 14) an Radbremsen (5, 6, 7, 8) einer zu regelnden Fahrzeugachse (HA, VA) derartig in Abhängigkeit einer erfassten Fahrzeug-Ist-Verzögerung ($z_{Ist}$) anzusteuern, dass

- der Bremsdruck ($p_{HA}$, $p_{VA}$) an den Radbremsen (5, 6, 7, 8) der zu regelnden Fahrzeugachse (HA, VA) erhöht wird, wenn die Fahrzeug-Ist-Verzögerung ($z_{Ist}$) kleiner ist als die Minimalverzögerung ($z_{min}$) zum Erreichen einer Mindest-Bremswirkung, und
- der Bremsdruck ($p_{HA}$, $p_{VA}$) an den Radbremsen (5, 6, 7, 8) der zu regelnden Fahrzeugachse (HA, VA) limitiert wird, wenn die Fahrzeug-Ist-Verzögerung ($z_{Ist}$) größer ist als die Maximalverzögerung ($z_{max}$) zum Begrenzen der Bremswirkung der zu regelnden Fahrzeugachse (HA, VA).

**17.** Vorrichtung nach Anspruch 16, **dadurch gekennzeichnet, dass** die zu regelnde Fahrzeugachse eine Hinterachse (HA) oder eine Vorderachse (VA) des Fahrzeuges (200) ist.

**18.** Fahrzeug (200) mit einem Bremssystem (100), mindestens aufweisend:

ein Bremsventil (9.2) zum Aussteuern eines Bremsdruckes ($p_{HA}$, $p_{VA}$) an Radbremsen (5, 6, 7, 8) des Fahrzeuges (200),
einen Bremswertgeber (9.3) zum Erfassen einer Fahrzeug-Soll-Verzögerung ($Z_{Soll}$),
Mittel zum Erfassen einer Fahrzeug-Ist-Verzögerung ($z_{Ist}$),
ABS-Bremsventile (11, 12, 13, 14), sowie
eine Vorrichtung (15) nach einem der Ansprüche 16 oder 17, insbesondere zur Durchführung des Verfahrens nach einem der Ansprüche 1 bis 15.

**Claims**

**1.** Method for controlling a vehicle deceleration in a vehicle (200) comprising an ABS braking system (100), including at least the following steps:

detecting a setpoint vehicle deceleration ($z_{Soll}$) (St1) predetermined by the driver,
establishing a maximum deceleration ($z_{max}$) and a minimum deceleration ($z_{min}$), in each case as a function of the detected setpoint vehicle deceleration ($z_{Soll}$) (St3),
detecting an actual vehicle deceleration ($z_{Ist}$) (St4), and
controlling a brake pressure ($p_{HA}$, $p_{VA}$) at wheel brakes (5, 6, 7, 8) of a vehicle axle (HA, VA) to be controlled as a function of the detected actual vehicle deceleration ($z_{Ist}$) by controlling ABS brake valves (11, 12, 13, 14) in such a way that

- the brake pressure ($p_{HA}$, $p_{VA}$) at the wheel brakes (5, 6, 7, 8) of the vehicle axle (HA, VA) to be controlled is increased when the actual vehicle deceleration ($z_{Ist}$) is less than the minimum deceleration ($z_{min}$) for achieving a minimum braking effect (St6.1), and
- the brake pressure ($p_{HA}$, $p_{VA}$) at the wheel brakes (5, 6, 7, 8) of the vehicle axle (HA, VA) to be controlled is limited when the actual vehicle deceleration ($z_{Ist}$) is greater than the maximum deceleration ($z_{max}$) for limiting the braking effect of the vehicle axle (HA, VA) to be controlled (St6.3).

**2.** Method according to Claim 1, **characterized in that** the maximum deceleration ($z_{max}$) is established on the basis of a maximum deceleration characteristic curve ($z_{Kmax}$) and the minimum deceleration ($z_{min}$) is established on the basis of the minimum deceleration characteristic curve ($z_{Kmin}$), which represent a dependence of the maximum deceleration ($z_{max}$) and the minimum deceleration ($z_{min}$), respectively, on the setpoint vehicle deceleration ($z_{Soll}$).

**3.** Method according to Claim 2, **characterized in that** the maximum deceleration characteristic curve ($z_{Kmax}$) is dependent on a load of the vehicle (200).

**4.** Method according to Claim 3, **characterized in that** the load of the vehicle (200) is measured with the aid of an axle load sensor or is derived from a detected actual differential slip ($DS_{Ist}$).

5. Method according to Claim 3 or 4, **characterized in that** the maximum deceleration characteristic curve ($z_{Kmax}$) increases more strongly in the case of a low load, and so the brake pressure ($p_{HA}$, $p_{VA}$) is limited in the case of a low load of the vehicle (200) given higher detected actual vehicle decelerations ($z_{Ist}$), in contrast to a high load of the vehicle (200).

6. Method according to one of Claims 2 to 5, **characterized in that** the maximum deceleration characteristic curve ($z_{Kmax}$) has a harmonic course without steps, in order to limit the brake pressure ($p_{HA}$, $p_{VA}$) without jerkily decelerating the vehicle (200) .

7. Method according to one of the preceding claims, **characterized in that** the brake pressure ($p_{HA}$, $p_{VA}$) at the wheel brakes (5, 6, 7, 8) of the vehicle axle (HA, VA) to be controlled is held or reduced when the actual vehicle deceleration ($z_{Ist}$) is greater than the maximum deceleration ($z_{max}$) .

8. Method according to one of the preceding claims, **characterized in that** the brake pressure ($p_{HA}$, $p_{VA}$) at the wheel brakes (5, 6, 7, 8) of the vehicle axle (HA, VA) to be controlled is controlled as a function of a detected actual differential slip ($DS_{Ist}$) when the actual vehicle deceleration ($z_{Ist}$) is less than the maximum deceleration ($z_{max}$) and greater than the minimum deceleration ($z_{min}$) (St6.2), wherein the actual differential slip ($DS_{Ist}$) indicates the difference in a rotational behavior of the vehicle axle (HA, VA) to be controlled with respect to another vehicle axle (HA, VA) .

9. Method according to Claim 8, **characterized in that** the actual differential slip ($DS_{Ist}$) is calculated from a difference of an ascertained rear axle brake slip ($DS_{HA}$) minus an ascertained front axle brake slip ($DS_{VA}$), preferably normalized to the rear axle brake slip ($DS_{HA}$), or

   a difference of an ascertained front axle axle-speed ($V_{VA}$) minus an ascertained rear axle axle-speed ($V_{HA}$), preferably normalized to the front axle axle-speed ($V_{VA}$),
   wherein the rear axle (HA) is the vehicle axle driven by an engine.

10. Method according to Claim 8 or 9, **characterized in that** the brake pressure ($p_{HA}$, $p_{VA}$) is controlled as a function of the actual differential slip ($DS_{Ist}$) in such a way that the actual differential slip ($DS_{Ist}$) corresponds to a setpoint differential slip ($DS_{Soll}$), wherein the brake pressure ($p_{HA}$, $p_{VA}$) at the wheel brakes (5, 6, 7, 8) of the vehicle axle (HA, VA) to be controlled

    - is limited for this purpose when the vehicle axle (HA, VA) to be controlled is over-braked (St101.1) relative to the other vehicle axle (VA, HA), and
    - is increased for this purpose when the vehicle axle (HA, VA) to be controlled is under-braked (St101.2) relative to the other vehicle axle (VA, HA) .

11. Method according to one of Claims 8 to 10, **characterized in that** the brake pressure ($p_{HA}$, $p_{VA}$) at the wheel brakes (5, 6, 7, 8) of the vehicle axle (HA, VA) to be controlled is reduced as a function of the actual differential slip ($DS_{Ist}$) when the actual vehicle deceleration ($z_{Ist}$) is greater than the maximum deceleration ($z_{max}$) and the vehicle axle (HA, VA) to be controlled is over-braked relative to the other vehicle axle (HA, VA).

12. Method according to Claim 10 or 11, **characterized in that** the setpoint differential slip ($DS_{Soll}$) is dependent on the detected actual vehicle deceleration ($z_{Ist}$) or the setpoint vehicle deceleration ($z_{Soll}$),
    wherein, in the case of an increasing actual vehicle deceleration ($z_{Ist}$) or an increasing setpoint vehicle deceleration ($z_{Soll}$), the setpoint differential slip ($DS_{Soll}$) decreases in the direction of a synchronous wheel rotational behavior of the wheels (1, 2, 3, 4) of the vehicle axle (HA, VA) to be controlled and of the other vehicle axle (VA, HA), and so the brake pressure ($p_{HA}$, $p_{HA}$) at the vehicle axle (VA, HA) to be controlled is already limited in the event of a lower relative over-braking.

13. Method according to one of Claims 10 to 12, **characterized in that**, if the vehicle axle to be controlled is the rear axle (HA), the brake pressure ($p_{HA}$, $p_{VA}$) at rear wheel brakes (5, 6)

    - is limited when the actual differential slip ($DS_{Ist}$) is greater than the setpoint differential slip ($DS_{Soll}$), and
    - is increased when the actual differential slip ($DS_{Ist}$) is less than the setpoint differential slip ($DS_{Soll}$), and
    if the vehicle axle to be controlled is the front axle (VA), the brake pressure ($p_{HA}$, $p_{VA}$) at front wheel brakes (5, 6)

- is limited when the actual differential slip ($DS_{Ist}$) is less than the setpoint differential slip ($DS_{Soll}$), and
- is increased when the actual differential slip ($DS_{Ist}$) is greater than the setpoint differential slip ($DS_{Soll}$).

14. Method according to one of the preceding claims, **characterized in that** the vehicle axle to be controlled is a rear axle (HA) of the vehicle (200) or a front axle (VA) of the vehicle (200).

15. Method according to one of the preceding claims, **characterized in that**, in the event that the brake pressure ($p_{HA}$, $p_{VA}$) is limited at the wheel brakes (5, 6, 7, 8) of the vehicle axle (HA, VA) to be controlled, the brake pressure ($p_{HA}$, $p_{VA}$) is merely held or reduced, and is not increased.

16. Device (15) for electronically controlling a vehicle deceleration in a vehicle (200) comprising an ABS brake system (100), in particular for carrying out a method according to one of the preceding claims, wherein the device (15) is designed for
selecting a maximum deceleration ($z_{max}$) and a minimum deceleration ($z_{min}$) as a function of a detected setpoint vehicle deceleration ($z_{Soll}$), and controlling ABS brake valves (11, 12, 13, 14) at wheel brakes (5, 6, 7, 8) of a vehicle axle (HA, VA) to be controlled as a function of a detected actual vehicle deceleration ($z_{Ist}$) in such a way that

- the brake pressure ($p_{HA}$, $p_{VA}$) at the wheel brakes (5, 6, 7, 8) of the vehicle axle (HA, VA) to be controlled is increased when the actual vehicle deceleration ($z_{Ist}$) is less than the minimum deceleration ($z_{min}$) for achieving a minimum braking effect, and
- the brake pressure ($p_{HA}$, $p_{VA}$) at the wheel brakes (5, 6, 7, 8) of the vehicle axle (HA, VA) to be controlled is limited when the actual vehicle deceleration ($z_{Ist}$) is greater than the maximum deceleration ($z_{max}$) for limiting the braking effect of the vehicle axle (HA, VA) to be controlled.

17. Device according to Claim 16, **characterized in that** the vehicle axle to be controlled is a rear axle (HA) or a front axle (VA) of the vehicle (200).

18. Vehicle (200) comprising a brake system (100), at least comprising:

a brake valve (9.2) for delivering a brake pressure ($p_{HA}$, $p_{VA}$) at wheel brakes (5, 6, 7, 8) of the vehicle (200),
a brake signal transmitter (9.3) for detecting a setpoint vehicle deceleration ($z_{Soll}$),
means for detecting an actual vehicle deceleration ($z_{Ist}$),
ABS brake valves (11, 12, 13, 14), and
a device (15) according to one of Claims 16 or 17, in particular for carrying out the method according to one of Claims 1 to 15.

**Revendications**

1. Procédé de régulation d'un ralentissement de véhicule dans un véhicule (200) avec un système de freinage ABS (100), comprenant au moins les étapes suivantes :

détection (St1) d'un ralentissement de consigne du véhicule ($z_{Soll}$) prédéfini par le conducteur,
établissement (St3) d'un ralentissement maximal ($z_{max}$) ainsi que d'un ralentissement minimal ($z_{min}$) à chaque fois en fonction du ralentissement de consigne du véhicule ($z_{Soll}$) détecté,
détection (St4) d'un ralentissement actuel du véhicule ($z_{Ist}$) et
régulation d'une pression de freinage ($p_{HA}$, $p_{VA}$) au niveau des freins de roues (5, 6, 7, 8) d'un essieu de véhicule à régler (HA, VA) en fonction du ralentissement actuel du véhicule ($z_{Ist}$) détecté par commande de soupapes de frein ABS (11, 12, 13, 14) de telle sorte que

- la pression de freinage ($p_{HA}$, $p_{VA}$) au niveau des freins de roues (5, 6, 7, 8) de l'essieu de véhicule à régler (HA, VA) soit augmentée lorsque le ralentissement actuel du véhicule ($z_{Ist}$) est inférieur au ralentissement minimal ($z_{min}$) pour obtenir un effet de freinage minimal (St6.1), et
- la pression de freinage ($p_{HA}$, $p_{VA}$) au niveau des freins de roues (5, 6, 7, 8) de l'essieu de véhicule à régler (HA, VA) soit limitée lorsque le ralentissement actuel du véhicule ($z_{ist}$) est supérieur au ralentissement maximal ($z_{max}$) pour limiter l'effet de freinage de l'essieu de véhicule à régler (HA, VA)(St6.3).

2. Procédé selon la revendication 1, **caractérisé en ce que** le ralentissement maximal ($z_{max}$) est établi à l'aide d'une courbe caractéristique de ralentissement maximal ($z_{Kmax}$) et le ralentissement minimal ($z_{min}$) est établi à l'aide d'une courbe caractéristique de ralentissement minimal ($z_{Kmin}$), qui représentent à chaque fois une relation de dépendance entre le ralentissement maximal ($z_{max}$), respectivement le ralentissement minimal ($z_{min}$), et le ralentissement de consigne du véhicule ($z_{Soll}$).

**3.** Procédé selon la revendication 2, **caractérisé en ce que** la courbe caractéristique de ralentissement maximal ($z_{Kmax}$) dépend d'un chargement du véhicule (200) .

**4.** Procédé selon la revendication 3, **caractérisé en ce que** le chargement du véhicule (200) est mesuré avec un capteur de charge d'essieu ou est déduit à partir d'une différence de patinage actuelle détectée ($DS_{Ist}$).

**5.** Procédé selon la revendication 3 ou 4, **caractérisé en ce que** la courbe caractéristique de ralentissement maximal ($z_{Kmax}$) augmente plus fortement pour un faible chargement de sorte que la pression de freinage ($p_{HA}$, $p_{VA}$) soit limitée pour un faible chargement du véhicule (200) dans le cas de ralentissements supérieurs actuels du véhicule ($z_{Ist}$) détectés, contrairement à un chargement élevé du véhicule (200).

**6.** Procédé selon l'une quelconque des revendications 2 à 5, **caractérisé en ce que** la courbe caractéristique de ralentissement maximal ($z_{Kmax}$) présente une allure harmonique sans échelons pour limiter la pression de freinage ($p_{HA}$, $p_{VA}$) sans ralentir le véhicule (200) par à-coups.

**7.** Procédé selon l'une quelconque des revendications précédentes, **caractérisé en ce que** la pression de freinage ($p_{HA}$, $p_{VA}$) au niveau des freins de roues (5, 6, 7, 8) de l'essieu de véhicule à régler (HA, VA) est maintenue ou abaissée lorsque le ralentissement actuel du véhicule ($z_{Ist}$) est supérieur au ralentissement maximal ($Z_{max}$).

**8.** Procédé selon l'une quelconque des revendications précédentes, **caractérisé en ce que** la pression de freinage ($p_{HA}$, $p_{VA}$) au niveau des freins de roues (5, 6, 7, 8) de l'essieu de véhicule à régler (HA, VA) est régulée en fonction d'une différence de patinage actuelle détectée ($DS_{Ist}$) lorsque le ralentissement actuel du véhicule ($z_{Ist}$) est inférieur au ralentissement maximal ($Z_{max}$) et supérieur au ralentissement minimal ($z_{min}$) (St6.2), la différence de patinage actuelle ($DS_{Ist}$) indiquant la différence de comportement de rotation entre l'essieu de véhicule à régler (HA, VA) et un autre essieu de véhicule (VA, HA).

**9.** Procédé selon la revendication 8, **caractérisé en ce que** la différence de patinage actuelle ($DS_{Ist}$) est calculée à partir d'une différence d'un patinage de freinage d'essieu arrière déterminé ($DS_{HA}$) moins un patinage de freinage d'essieu avant déterminé ($DS_{VA}$), de préférence de manière normalisée à un patinage de freinage d'essieu arrière ($DS_{HA}$), ou
à partir d'une différence d'une vitesse d'essieu avant déterminée ($V_{VA}$) moins une vitesse d'essieu arrière déterminée ($V_{HA}$), de préférence de manière normalisée à la vitesse d'essieu avant (VA), l'essieu arrière (HA) étant l'essieu du véhicule entraîné par un moteur.

**10.** Procédé selon la revendication 8 ou 9, **caractérisé en ce que** la pression de freinage ($p_{HA}$, $p_{VA}$) est régulée en fonction de la différence de patinage actuelle ($DS_{Ist}$) de telle sorte que la différence de patinage actuelle ($DS_{Ist}$) corresponde à une différence de patinage de consigne ($DS_{Soll}$), la pression de freinage ($p_{HA}$, $p_{VA}$) au niveau des freins de roues (5, 6, 7, 8) de l'essieu de véhicule à régler (HA, VA) étant à cet effet

- limitée si l'essieu de véhicule à régler (HA, VA) est sur-freiné (St101.1) par rapport à l'autre essieu de véhicule (VA, HA), et
- augmentée si l'essieu de véhicule à régler (HA, VA) est sous-freiné (St101.2) par rapport à l'autre essieu de véhicule (VA, HA).

**11.** Procédé selon l'une quelconque des revendications 8 à 10, **caractérisé en ce que** la pression de freinage ($p_{HA}$, $p_{VA}$) au niveau des freins de roues (5, 6, 7, 8) de l'essieu de véhicule à régler (HA, VA) est réduite en fonction de la différence de patinage actuelle ($DS_{Ist}$) si le ralentissement actuel du véhicule ($z_{Ist}$) est supérieur au ralentissement maximal ($z_{max}$) et que l'essieu de véhicule à régler (HA, VA) est sur-freiné par rapport à l'autre essieu de véhicule (VA, HA).

**12.** Procédé selon la revendication 10 ou 11, **caractérisé en ce que** la différence de patinage de consigne ($DS_{Soll}$), dépend du ralentissement actuel détecté du véhicule ($z_{Ist}$) ou du ralentissement de consigne du véhicule ($Z_{Soll}$), la différence de patinage de consigne ($DS_{Soll}$), diminuant lorsque le ralentissement actuel du véhicule ($Z_{Ist}$) augmente ou que le ralentissement de consigne du véhicule ($z_{Soll}$) augmente dans le sens d'un comportement de rotation de roue synchrone des roues (1, 2, 3, 4) de l'essieu de véhicule à régler (HA, VA) et de l'autre essieu de véhicule (VA, HA) de telle sorte que la pression de freinage ($p_{HA}$, $p_{HA}$) au niveau de l'essieu de véhicule à régler (VA, HA) soit déjà limitée dans le cas d'un sur-freinage relatif faible.

13. Procédé selon l'une quelconque des revendications 10 à 12, **caractérisé en ce que** si l'essieu de véhicule à régler est l'essieu arrière (HA), la pression de freinage ($p_{HA}$, $p_{VA}$) au niveau des freins de roues arrière (5, 6)

- est limitée si la différence de patinage actuelle ($DS_{Ist}$) est supérieure à la différence de patinage de consigne ($DS_{Soll}$), et
- est augmentée si la différence de patinage actuelle ($DS_{Ist}$) est inférieure à la différence de patinage de consigne ($DS_{Soll}$), et

si l'essieu de véhicule à régler est l'essieu avant (VA), la pression de freinage ($p_{HA}$, $p_{VA}$) au niveau des freins de roues avant (5, 6)

- est limitée si la différence de patinage actuelle ($DS_{Ist}$) est inférieure à la différence de patinage de consigne ($DS_{Soll}$), et
- est augmentée si la différence de patinage actuelle ($DS_{Ist}$) est supérieure à la différence de patinage de consigne ($DS_{Soll}$).

14. Procédé selon l'une quelconque des revendications précédentes, **caractérisé en ce que** l'essieu de véhicule à régler est un essieu arrière (HA) du véhicule (200) ou un essieu avant (VA) du véhicule (200) .

15. Procédé selon l'une quelconque des revendications précédentes, **caractérisé en ce que** dans le cas d'une limitation de la pression de freinage ($p_{HA}$, $p_{VA}$) au niveau des freins de roues (5, 6, 7, 8) de l'essieu de véhicule à régler (HA, VA), la pression de freinage ($p_{HA}$, $p_{VA}$) est simplement maintenue ou réduite et n'est pas augmentée.

16. Dispositif (15) de régulation électronique d'un ralentissement de véhicule dans un véhicule (200) avec un système de freinage ABS (100), en particulier pour mettre en œuvre un procédé selon l'une quelconque des revendications précédentes, le dispositif (15) étant réalisé

pour sélectionner un ralentissement maximal ($z_{max}$) et ralentissement minimal ($z_{min}$) en fonction d'un ralentissement de consigne détecté du véhicule ($z_{Soll}$), et

pour commander des soupapes de frein ABS (11, 12, 13, 14) au niveau des freins de roues (5, 6, 7, 8) d'un essieu de véhicule à régler (HA, VA) en fonction d'un ralentissement actuel détecté du véhicule ($z_{Ist}$) de telle sorte que

- la pression de freinage ($p_{HA}$, $p_{VA}$) au niveau des freins de roues (5, 6, 7, 8) de l'essieu de véhicule à régler (HA, VA) soit augmentée lorsque le ralentissement actuel du véhicule ($z_{Ist}$) est inférieur au ralentissement minimal ($z_{min}$) pour obtenir un effet de freinage minimal, et
- la pression de freinage ($p_{HA}$, $p_{VA}$) au niveau des freins de roues (5, 6, 7, 8) de l'essieu de véhicule à régler (HA, VA) soit limitée lorsque le ralentissement actuel du véhicule ($z_{Ist}$) est supérieur au ralentissement maximal ($z_{max}$) pour limiter l'effet de freinage de l'essieu de véhicule à régler (HA, VA).

17. Dispositif selon la revendication 16, **caractérisé en ce que** l'essieu de véhicule à régler est un essieu arrière (HA) ou un essieu avant (VA) du véhicule (200).

18. Véhicule (200) comprenant un système de freinage (100) présentant au moins :

une soupape de frein (9.2) pour commander une pression de freinage ($p_{HA}$, $p_{VA}$) au niveau des freins de roues (5, 6, 7, 8) du véhicule (200),
un détecteur de valeur de freinage (9.3) pour détecter un ralentissement de consigne du véhicule ($z_{Soll}$),
des moyens pour détecter un ralentissement actuel du véhicule ($z_{Ist}$),
des soupapes de frein ABS (11, 12, 13, 14), et
un dispositif (15) selon l'une quelconque des revendications 16 et 17, en particulier pour mettre en œuvre le procédé selon l'une quelconque des revendications 1 à 15.

**Fig. 1**

**Fig. 2**

**Fig. 3**

Fig. 4a

Fig. 4b

EP 3 303 075 B1

St0

$z_{Soll}$ — St1

$DS_{Off}$ — St2

$z_{min}/z_{max}$ — St3

$z_{Ist}$ — St4

St5

B1   B3
B2

St6.1

$p_{HA}$ erhöhen

DSR

$p_{HA}$ limitieren

St6.2   St6.3

**Fig. 5**

22

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008009948 B3
- DE 102011118130 B4

- DE 102006045317 A1